# EUROPEAN PATENT APPLICATION

(11) **EP 4 793 795 A1**
(43) Date of publication of application: **19.08.2026**
(21) Application number: 26157939.5
(22) Date of filing: 11.02.2026
(51) Int. Cl.: G06F 16/3332

(54) **QUERYLESS INFORMATION RETRIEVAL DURING A LIVE CONVERSATION VIA A BIFURCATED MODEL IMPLEMENTED IN A SECURED COMPUTER NETWORK**

(30) Priority: 14.02.2025 US 202519054546; 14.02.2025 US 202519054606
(71) Applicant: Capital One Services, LLC, McLean, Virginia 22102 (US)
(72) Inventor: DATLA, Vivek, McLean, VA 22102 (US); HUANG, Zhiqi, McLean, VA 22102 (US); SAMUEL, Alfy, McLean, VA 22102 (US); LIU, Daben, McLean, VA 22102 (US); TANG, Yuhui, McLean, VA 22102 (US); YIN, Youbing, McLean, VA 22102 (US); WU, Jingyu, McLean, VA 22102 (US); ZHU, Jing, McLean, VA 22102 (US)
(74) Representative: Boult Wade Tennant LLP

(57) **Abstract**

Methods and systems are described herein for facilitating queryless information retrieval during a live conversation via a bifurcated model. For example, the system may receive, a first set of decrypted utterances spoken during the live conversation. The system may provide the first set of decrypted utterances as input to a bifurcated model comprising (i) a first bifurcated model portion associated with a dynamic utterance embedding space and (ii) a second bifurcated model portion associated with a static computer file embedding space. The system may then generate, via the bifurcated model, a first intermediate output from the first bifurcated model portion indicating a first utterance embedding and a second intermediate output from the second bifurcated model portion indicating a first computer file embedding. The system may then generate during the live conversation, a graphical representation of a computer file associated with the first computer file embedding.

## Description

### BACKGROUND

In recent years, the use of artificial intelligence, including, but not limited to, machine learning, deep learning, etc. (referred to collectively herein as artificial intelligence models, machine learning models, or simply models) has exponentially increased. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. However, despite these benefits and despite the wide-ranging number of potential applications, practical implementations of artificial intelligence have been hindered by several technical problems. First, artificial intelligence may rely on large amounts of high-quality data. The process for obtaining this data and ensuring it is high-quality can be complex and time-consuming. Additionally, data that is obtained may need to be categorized and labeled accurately, which can be difficult, time-consuming and a manual task. Second, despite the mainstream popularity of artificial intelligence, practical implementations of artificial intelligence may require specialized knowledge to design, program, and integrate artificial intelligence-based solutions, which can limit the amount of people and resources available to create these practical implementations. Finally, results based on artificial intelligence can be difficult to review as the process by which the results are made may be unknown or obscured. This obscurity can create hurdles for identifying errors in the results, as well as improving the models providing the results. These technical problems may present an inherent problem with attempting to use an artificial intelligence-based solution in retrieving relevant information based on a live conversation.

### SUMMARY

Methods and systems are described herein for novel uses and/or improvements to real-time conversation information retrieval. As one example, methods and systems are described herein for improving information retrieval during a live conversation using queryless information retrieval via a bifurcated model implemented in a secured computer network.

Existing systems encounter several technical challenges when retrieving relevant documents during a live conversation. A primary issue is the ability to obtain contextually and semantically accurate information to help solve a problem faced by a user discussed during the conversation. While many systems may leverage Dense Passage Retrieval (DPR) techniques to improve performance of Large Language Models (LLMs) in Retrieval-Augmented Generation (RAG) paradigms to retrieve relevant information and generate a response to a query, such systems rely on computationally intensive training routines and are susceptible to generating hallucinated responses that may not be factually accurate. For example, to implement such systems, DPR techniques require (i) an explicit query to be provided/generated to search a database, (ii) a model being trained to learn both explicit query embeddings and information embeddings (e.g., document embeddings) to retrieve relevant information, and (iii) the model being trained to generate contextually and semantically accurate responses based on the explicit query and the relevant information.

However, in the context of live conversations, explicit queries on which these existing systems rely are not always available. For example, during a live conversation, a user may make one or more statements that are not in the form of an explicit query (e.g., "Why does my 2015 MacBook Pro say I am disconnected from the Internet?", "Can you help me reconnect my computer to the Internet?"). Explicit queries are precise and include necessary information that does not require assumptions to be made. Rather, statements or other utterances made by the user may be implicit in nature (e.g., "I cannot access the Internet," "I need help."). Implicit queries or other statements/utterances may be conversational and context-dependent, where one or more assumptions may be made based on the context of the conversation. As the nature of these existing systems rely on explicit queries to retrieve relevant information (e.g., documents) to a problem (or other situation) a user may be facing, it may be difficult to retrieve such relevant information when implicit queries (or other statements/utterances) are made during the live conversation. Further contributing to this issue is the reliance of these systems on being trained on explicit queries and relevant documents.

For instance, to train such existing systems to retrieve information leveraging DPR, a query embedding model and a document embedding model must be trained together such that the (i) query embedding space of the query embedding model and (ii) the document embedding space of the document embedding model are shared. In other words, the system must train both models in a manner where both the queries and the documents are embedded into a single space such that a query embedding can be directly compared to a document embedding, and information (e.g., a document) may be retrieved based on the comparison. However, to facilitate this, anytime the models are trained or when there is an update to either the query embedding model or the document embedding model, both models must be trained due to the shared embedding space (e.g., where known query embeddings corresponding to known document embeddings are both adjusted to be more similar to each other, enabling the direct comparison). This presents a computational burden when either of the models need to be updated (e.g., when only new documents are added, when only new queries are added, or both) given the need for (i) new labeled training data and (ii) each model needing to be trained to maintain the same embedding space. The reliance on learning both the query and document embeddings adds to the already computationally intensive training processes of these systems.

Finally, while LLMs integrated into such DPR/RAG frameworks may generate answers based on retrieved information, they are prone to producing hallucinated responses-outputs that are coherent yet factually incorrect. Although RAG frameworks can mitigate some instances of hallucination, the inherent nature of LLMs still leaves them vulnerable to generating or retrieving inaccurate information, which can negatively impact user experience by presenting counter-productive information not relevant to the user's problem.

To overcome the technical disadvantages of these existing systems, methods and systems described herein improve information retrieval accuracy during a live conversation by using a unique, bifurcated model architecture that facilitates queryless information retrieval. For example, such methods and systems allow for relevant computer files to be displayed to a user during a conversation that pertains to the conversation as whole while reducing the document retrieval inaccuracies stemming from hallucinated responses - thereby enhancing the user experience when solving problems discussed during the live conversation by providing relevant supplemental information.

For example, during a live conversation, the system receives a set of decrypted utterances spoken by the user. These utterances are then provided as input to a bifurcated model, which is trained to generate computer file identifiers corresponding to the utterances. The bifurcated model comprises two portions: (i) first bifurcated model portion associated with a dynamic utterance embedding space that generates first intermediate outputs indicating utterance embeddings and (ii) a second bifurcated model portion associated with a static computer file embedding space that generates second intermediate outputs indicating computer file embeddings. Contrary to existing systems (e.g., as described above) which may use model(s) that rely on explicitly provided queries, the bifurcated model accepts utterances spoken during the live conversation and retrieves relevant information (e.g., computer files) based on such utterances - thereby expanding the range of input data traditionally accepted for information retrieval.

Additionally, as opposed to existing systems' reliance on models sharing a common embedding space, the bifurcated model comprises a unique architecture that maintains separate embedding spaces respective to each of the first and second bifurcated model portions. To facilitate information retrieval that uses separate embedding spaces via the bifurcated model, the bifurcated model is trained such that the first bifurcated model portion is trained to generate dynamic utterance embeddings with respect to static computer file embeddings. In other words, the bifurcated model is trained to learn utterance embeddings of utterances that adhere to static computer file embeddings - thereby facilitating direct comparison between embeddings of separate embedding spaces. By doing so, the system allows the bifurcated model to generate a first intermediate output (e.g., based on the set of decrypted utterances) indicating an utterance embedding, which is then used to generate, via the bifurcated model, a second intermediate output indicating a computer file embedding. For example, by generating the second intermediate output based on the first intermediate output, the bifurcated model enables data of one domain (e.g., utterances) to be used to identify information that is contextually and semantically relevant to another domain (e.g., computer files), even though they are of separate embedding spaces. Furthermore, by maintaining separate embedding spaces of the respective model portions, in the event of model updates to one or more portions of the bifurcated model, the system need only train the model desired to be updated (e.g., as opposed to both models) - thereby reducing computational resource utilization that is otherwise inherent in updating existing systems.

Using the generated utterance embedding and the generated computer file embedding, the system may generate as output, via the bifurcated model, a computer file identifier. For example, as the bifurcated model facilitates direct embedding comparison of separate embedding spaces, the system may determine a similarity metric between the computer file embedding and the utterance embedding. In response to the similarity metric satisfying a similarity threshold, the system may generate for display, on the user interface of a user device, during the live conversation, a graphical representation of a computer file corresponding to the computer file identifier. For example, unlike the LLM integrated RAG frameworks leveraging DPR techniques described above, the system is not susceptible to LLM-derived hallucinations as the system instead relies on retrieving established data for retrieval (e.g., based on embedding comparisons). This in turn enhances the user experience by providing access to contextually relevant information (e.g., documents) during the live conversation. Such capability improves problem-solving and decision-making in dynamic interactions, ensuring that users receive accurate and timely information as the conversation progresses.

In some aspects, methods and systems for facilitating queryless information retrieval during a live conversation via a bifurcated model implemented in a secured computer network are described. For example, the system may receive, during a live conversation over a computer network, a first set of decrypted utterances spoken during the live conversation. The system may provide the first set of decrypted utterances as input to a bifurcated model, trained to generate computer file identifiers corresponding to utterances as output, the bifurcated model comprising (i) a first bifurcated model portion associated with a dynamic utterance embedding space and (ii) a second bifurcated model portion associated with a static computer file embedding space. In response to providing the first set of decrypted utterances as input to the bifurcated model, the system may generate, via the bifurcated model, a first intermediate output from the first bifurcated model portion indicating a first utterance embedding. The system may determine, via the bifurcated model, based on the first utterance embedding, a second intermediate output from the second bifurcated model portion indicating a first computer file embedding. The system may generate as output, via the bifurcated model, a first computer file identifier corresponding to the first computer file embedding based on a similarity metric between the first computer file embedding and the first utterance embedding satisfying a similarity threshold. The system may generate for display, on a user interface of a user device, during the live conversation, a graphical representation of a computer file corresponding to the first computer file identifier.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1 shows an illustrative diagram of a live conversation, in accordance with one or more embodiments.
FIG. 2 shows an illustrative diagram of a user interface associated with a live conversation, in accordance with one or more embodiments.
FIG. 3 shows illustrative components for a system used to facilitate information retrieval during a live conversation, in accordance with one or more embodiments.
FIG. 4 shows an illustrative diagram of an artificial intelligence model used to facilitate one or more operations, in accordance with one or more embodiments.
FIG. 5 shows a flowchart of the steps involved in improving information retrieval during a live conversation using queryless information retrieval via a bifurcated model implemented in a secured computer network, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

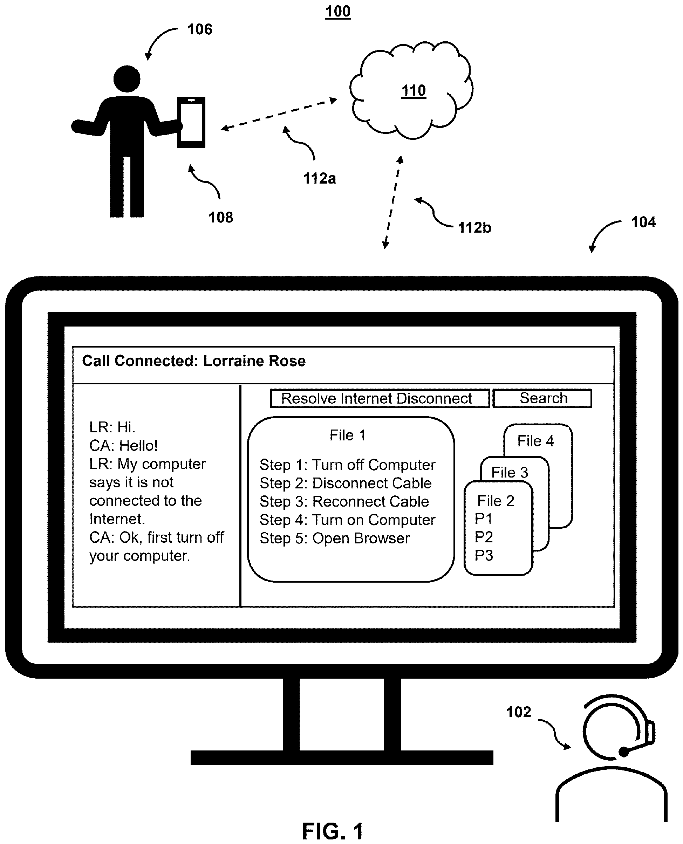

FIG. 1 shows an illustrative diagram of a live conversation, in accordance with one or more embodiments. For example, environment 100 shows a first user 102 engaging in a live (e.g., real-time) conversation with a second user 106. The first user 102 may engage in the live conversation via first user device 104 and the second user 106 may engage in the live conversation via second user device 108. First user device 104 and second user device 108 may communicate with each other over network 110 using communication links 112a-112b. For example, communication links 112a-112b may include wired or wireless communication paths, such as a satellite path, a fiber-optic path, a cable path, a path that supports Internet or Intranet communication, free-space connections (e.g., for broadcast or other wireless signals), or any other suitable wired or wireless communication path or combination of communication paths. Additionally, each of the components of environment 100 may include hardware/software that enable communication among communication links 112a-112b.

The live conversation may refer to a real-time conversation, such as a conversation involving an exchange of information between two or more users (e.g., people) where audio, text, or video are communicated between the two or more users in an ongoing, continuous manner, where such information is exchanged and delivered while the conversation is active. For example, the live conversation may be in various formats such as an audio format (e.g., a telephone conversation, VoIP conversation, etc.), a text format (e.g., text-based conversation, instant messengers, chat rooms, etc.), video format (e.g., video conferencing, live-streaming, etc.) or any combination thereof. A live conversation may be a current conversation that two or more users are currently involved in. For example, as opposed to a pre-recorded conversation, a live conversation may include instances where new information (e.g., data) is currently being transmitted (e.g., the conversation has not terminated or inactive).

In a customer service embodiment, the first user 102 may be a customer service agent and the second user 106 may be a customer. The customer service agent and the customer may engage in a live conversation over a communication network (e.g., network 110). The customer may inquire about a given scenario that the customer is currently experiencing. For example, the customer may look for help regarding how to reconnect to the Internet, to change user account information associated with the user, to check a current bank account balance, to update Personally Identifiable Information (PII) associated with the customers account, or other inquiry. For instance, in a customer service embodiment relating to a financial services, the customer may ask the customer service agent questions or provide statements to the customer service agent regarding servicing a financial account associated with the user, resolving issues related to one or more payments, resolving issues related to accessing their account via a mobile application associated with a respective financial service provider, or other financial service-related scenarios. While the customer service agent may specialize in aiding customers with such inquiries, the customer service agent must not only be attentive to the conversation to avoid a negative customer impression, but also be able to quickly locate supporting documents to help the customer. To locate supporting documents, the customer service agent may search one or more databases to locate relevant files to help the customer. However, locating supporting documents may be challenging. For instance, because the customer service agent is currently engaged in a conversation, the customer service agent may become distracted when attempting to formulate effective search queries to locate supporting files or documents. Additionally or alternatively, even if the customer service agent knows what type of document to look for, the customer service agent may be prone to generating incoherent search queries that may not result in effective search results being generated. Lastly, if multiple documents are discovered, the customer service agent must still parse through all the available documents to find those most pertinent to the customer's inquiry. Each of these difficulties may result in a poor customer experience as time may be wasted, and a large amount of computational resources may be wasted (e.g., due to a large amount of queries being submitted to a variety of databases to find relevant documents).

The system may use utterances to facilitate information retrieval. In disclosed embodiments, an utterance may include a unit of communication or expression. In some embodiments, an utterance may comprise spoken words. In some embodiments, an utterance may comprise sounds. In some embodiments, an utterance may comprise non-verbal elements (e.g., portions of text). In some embodiments, an utterance may comprise verbal elements, such as an expression, phrase, or other sound produced by a speaker in a single instance or within a specific conversational context. In some embodiments, an utterance may comprise a segment of input data corresponding to a conversational turn or thought.

The system may use decrypted utterances to facilitate information retrieval. In disclosed embodiments, a decrypted utterance may include an utterance that is transformed from one state to another state. In some embodiments, a decrypted utterance may comprise an utterance that is decrypted from an encrypted state associated with a cryptographic communication protocol. In some embodiments, a decrypted utterance may comprise an utterance that is transcribed. For example, an audio utterance may be decrypted using an audio-to-text model or algorithm. In some embodiments, a decrypted utterance may comprise a text utterance that is transformed into an audio utterance. For example, to aid the visually impaired, the text utterance may be transformed into an audio utterance via a text-to-audio model or algorithm.

The system may use tokens to preserve conversational context during a conversation. In disclosed embodiments, a token may include a discrete unit of information used by one or more computing devices to process information associated with the token. In some embodiments, a token may comprise context of at least a portion of a conversation. In some embodiments, a token may comprise context of at least an utterance of a conversation. In some embodiments, a token may comprise context of one or more utterances of a conversation. In some embodiments, a token may comprise a conversation token. For example, a conversation token (or context token) may include information, derived from or representing elements or other parts of a conversation. For example, a context token may capture semantic, syntactic, or contextual details to facilitate understanding, processing, or continuation of the conversation. In some embodiments, a token may comprise a metadata token. For example, the metadata token may include user identifiers, timestamps, tone, or other information that does not include utterances themselves transmitted during the conversation. In some embodiments, a token may comprise special tokens that indicate conversational boundaries during the conversation (e.g., the end of a user's turn in speaking, the end of a user's turn when conveying a thought, the beginning or activation of the conversation, the end or termination of the conversation). In some embodiments, a token may comprise an embedding of one or more utterances during a conversation. In some embodiments, a token may comprise utterances part of the conversation. In some embodiments, a token may comprise a summarization of one or more utterances part of the conversation. In some embodiments, a token may comprise all of, or a portion of the information described above. In some embodiments, a token may be a combination of one or more of the tokens described above.

The system may use graphical representations of files to be presented to one or more users. In disclosed embodiments, a graphical representation may include a visual depiction of information, data, or content in a format interpretable by human users. In some embodiments, a graphical representation may include a visual display of a file (e.g., a document, a graph, a computer file, a log file, transcripts, etc.). In some embodiments, a graphical representation may include visual elements such as images, diagrams, charts, icons, or other visual elements. In some embodiments, a graphical representation may include a rendered object. For example, the files may include files related to computer errors (e.g., log files, resolutions to errors, help documents, network protocols, documentation files, etc.). As another example, the files may include service provider specific files. For instance, a financial service provider may store or otherwise have access to financial documents such as bank account documents, loan documents, payment information, mobile application documents related to a financial service application, help documents, tax forms, transaction dispute forms, insurance policies, investment reports, financial account statements, customer correspondences, PII of customer accounts, or other financial documents. Such files (or other documents) may be retrieved and displayed during the live conversation based on one or more utterances communicated during the live conversation.

The system may use a user interface to display graphical representations (e.g., of files, documents, or other content) or enable users to interact with one or more system components. In disclosed embodiments, a user interface may include hardware/software components to facilitate a human-computer interaction and communication in a device, and may include display screens, keyboards, a mouse, and the appearance of a desktop. For example, a user interface may comprise a way a user interacts with an application or a website. In some embodiments, a user interface may facilitate a presentation or other display of graphical representations (or other elements). In some embodiments, a user interface may be a visual interface, an audio interface, or physical interface that enables a user to view or interact with one or more elements/components.

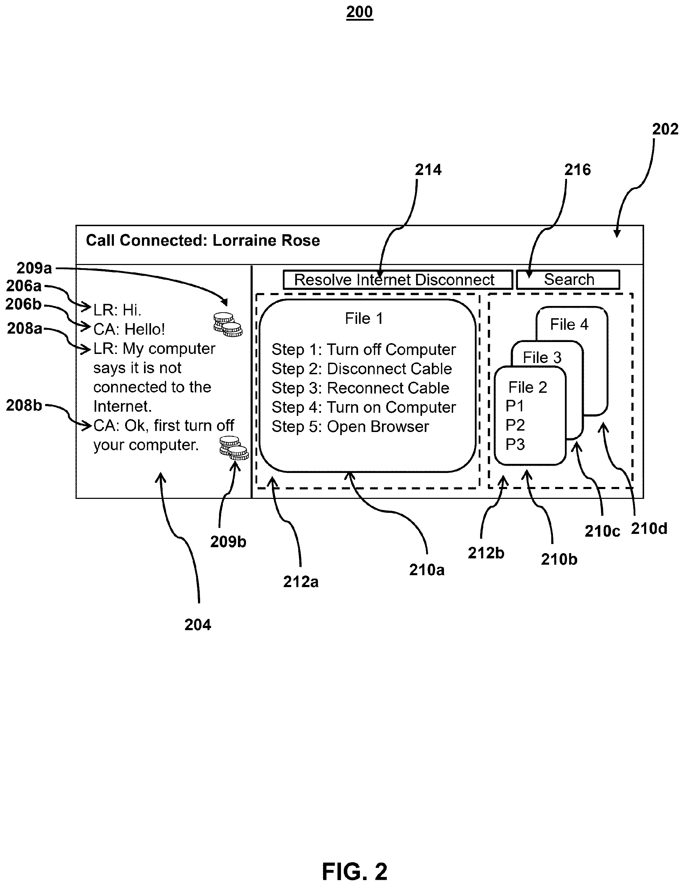

FIG. 2 shows an illustrative diagram of a user interface associated with a live conversation, in accordance with one or more embodiments. For example, user interface 200 shows an illustrative user interface presented to a user during a live conversation 202. User interface 200 may include a transcript 204 of the live conversation 202, a first set of decrypted utterances 206a-206b, a second set of decrypted utterances 208a-208b, tokens 209a-209b, a set of computer files 210a-210d, presentation regions 212a-212b, a search term 214, and a search button 216. Transcript 204 may be a transcript that is generated based on the live conversation 202. For example, the transcript may include decrypted utterances spoken by first user 102 and second user 106, transmitted between first user device 104 and second user device 108 (FIG. 1). As an example, a customer service agent may engage in a live conversation with a customer. As the live conversation progresses, the system may generate a transcript of utterances spoken during the live conversation. For example, in a computer-error embodiment, the live conversation may include words, phrases, or other utterances related to resolving an Internet disconnection issue. The customer and the customer service agent may converse with each other where the customer provides information (e.g., statements, queries, words, phrases, or other utterances) to the customer service agent indicating the Internet disconnect issue the customer is currently facing. In a financial services embodiment, however, the live conversation may be related to resolving a mobile application issue provided by a financial service provider. For example, the mobile application may be failing to enable the user access to the user's financial account. As another example, the live conversation may be related to resolving a misappropriated payment, servicing a loan associated with the customer, changing one or more financial account privileges, updating PII associated with the user's financial account, or other scenarios where the customer is seeking help or additional information related to financial scenarios.

The system may display the transcript of utterances on user interface 200 to enable the customer service agent to view what has been discussed during their live conversation to serve as reference information to locate one or more computer files. However, it should be noted, the user interface 200 may not merely be displayed to just the first user 102 (e.g., a customer service agent) but may also be displayed to the second user 106 (e.g., the customer). By doing so, the customer may also be able to view computer files, in accordance with one or more embodiments.

In some embodiments, the transcript 204 may include sets of decrypted utterances. For example, transcript 204 may include first set of decrypted utterances 206a-206b and second set of decrypted utterances 208a-208b. The first set of decrypted utterances 206a-206b and the second set of decrypted utterances 208a-208b, may each have portions of utterances. For example, the first set of decrypted utterances 206a-206b may be formed by a first portion of decrypted utterances 206a (e.g., "Hi"), and a second portion of decrypted utterances 206b (e.g., "Hello"). Likewise, the second set of decrypted utterances 208a-208b may be formed by a third portion of decrypted utterances 208a (e.g., "My," "computer," "says," "it," "is," "not," "connected," "to," "the," "Internet.") and a fourth portion of decrypted utterances 208b (e.g., "Ok," "first," "turn," "off," "your," "computer."). In some embodiments, the respective portions of utterances may correspond to a respective user. For example, the first portion of decrypted utterances 206a and the third portion of decrypted utterances 208a may correspond to second user 106 (FIG. 1). As another example, the second portion of decrypted utterances 206b and the fourth portion of decrypted utterances 208b may correspond to first user 102 (FIG. 1).

In a financial services embodiment, however, the first set of decrypted utterances 206a-206b and the second set of decrypted utterances 208a-208b may include utterances related to a financial service account of a customer (or other financial service-related utterances). For example, the second user 106 (FIG. 1) may be a customer that has an account provided by an entity (e.g., financial service provider) and the first user 102 may be a customer service agent that is associated with the entity to offer help or assist the customer. As such, the customer may converse with the customer service agent regarding fraudulent activity that the customer noticed. In such a case, first portion of decrypted utterances 206a may indicate "Hi", and a second portion of decrypted utterances 206b may indicate "Hello." Likewise, a third portion of decrypted utterances 208a may indicate "I," "noticed," "a," "payment," "that," "I," "did," "not," "make" and a fourth portion of decrypted utterances 208b may indicate "Ok," "let," "me," "help," "you."

The first set of decrypted utterances 206a-206b may indicate utterances that have occurred earlier than that of second set of decrypted utterances 208a-208b. As such, the first set of decrypted utterances 206a-206b may indicate historical utterances communicated during the live conversation 202, and the second set of decrypted utterances 208a-208b may indicate current utterances being communicated during the live conversation 202. The first set of decrypted utterances 206a-206b may be utterances spoken during a first time period of the live conversation 202, and the second set of decrypted utterances 206a-206b may be utterances spoken during a second time period of the live conversation 202. In some embodiments, the first time period may be earlier than that of the second time period with no overlap between the time periods. In some embodiments, the second time period may overlap a threshold amount of time with the first time period. By doing so, as will be explained later, the system may generate a token indicating utterance information of sets of utterances with respect to the time at which such utterances were communicated for later use to preserve contextual information of the live conversation when determining relevant files for the live conversation.

In some embodiments, the system may decrypt an encrypted set of utterances to generate the sets of decrypted utterances. For example, to enhance security of the live conversation 202, prior to, or during the live conversation 202 being activated, the system may cause an exchange of cryptographic keys associated with the user devices that are associated with the live conversation 202 to be performed to encrypt information (e.g., utterances or other data) passed between the user devices. For instance, prior to the live conversation 202 being activated, the system may cause the first user device 104 and the second user device 108 to exchange cryptographic keys to enable encrypted communication between the user devices. The cryptographic keys may be public keys (e.g., for asymmetric encryption) or private keys (e.g., for symmetric encryption). The encrypted communication may be in accordance with a cryptographic communication protocol, such as TLS/SSL, IPsec, PGP, SSH, Signal Protocol, Diffie-Hellman Key Exchange. The encrypted communication between the user devices may be based on an encryption algorithm such as AES, 3DES, RSA, EEC, or other encryption algorithms.

For example, in some embodiments, when the live conversation 202 is activated (e.g., begins, starts, etc.), the system may receive from a user device, a first set of encrypted utterances. Prior to receiving the first set of encrypted utterances, the user device may perform a cryptographic key exchange with another user device that is involved in the live conversation 202 to enable secure, encrypted communication between the user devices. For example, first user device 104 and second user device 108 may perform a cryptographic key exchange (e.g., a public key exchange associated with asymmetric encryption, a private key exchange for symmetric encryption) associated with a cryptographic communication protocol. By doing so, the system may enhance cybersecurity of the live conversation by facilitating secure communication between the user devices.

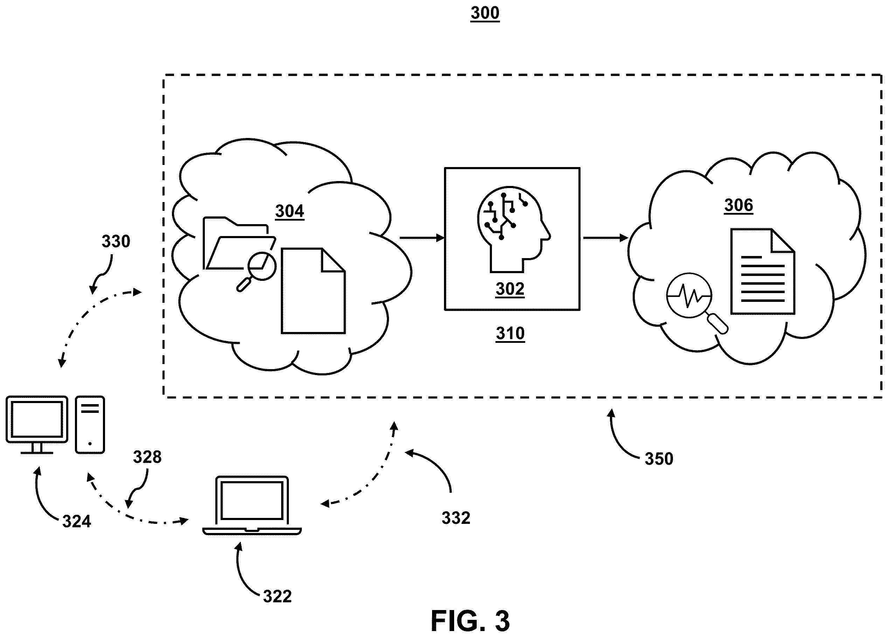

In some embodiments, the system may receive the first set of encrypted utterances, where the first set of encrypted utterances are encrypted via an encryption protocol using a public key associated with the second user device. For example, the system may receive, via the network 110, a first set of encrypted utterances from the second user device 108, where the first set of encrypted utterances is encrypted using the public key associated with the first user device 104 (FIG. 1). The system may then decrypt the first set of encrypted utterances via a private key associated with the first user device 104. For example, the first user device 104 may receive the set of encrypted utterances from second user device 108. The system may generate the first set of decrypted utterances based on (i) the first set of encrypted utterances and (ii) a second set of decrypted utterances by decrypting the first set of encrypted utterances via a private key associated with the first user device 104. For example, as the second user device 108 may transmit a set of encrypted utterances, the system may generate the first set of decrypted utterances by (i) decrypting the set of encrypted utterances (e.g., received from the second user device 108, such as the encrypted utterances corresponding to the first portion of decrypted utterances 206a) and (ii) adding a second set of decrypted utterances (e.g., utterances spoken by or transmitted from first user device 104, such as the second portion of decrypted utterances 206b) to the decrypted set of encrypted utterances (e.g., received from the first user device 104). That is, because the first user 102 may be part of the associated with an entity controlling system 300 (FIG. 3), it may be redundant to encrypt the utterances spoken by the first user device 104 for determining a relevant set of computer files. While the system may encrypt utterances by the first user 102 for transmission to the second user device 108 to enhance cybersecurity, the system may maintain the unencrypted (e.g., decrypted) form of utterances by the first user 102 for use in determining a relevant set of computer files associated with the live conversation 202 - thereby decreasing the amount of computational resources that would otherwise be wasted by encrypting a set of utterances to then be decrypted for processing. As an example, the system may generate the first set of decrypted utterances 206a-206b based on (i) decrypting a portion of the encrypted utterances received from the second user device 108 and (ii) adding a portion of decrypted utterances to be transmitted from the first user device 104 together to form the first set of decrypted utterances 206a-206b.

In some embodiments, the first set of decrypted utterances may be generated based on a secured model. For example, the system may receive, during the live conversation 202, a first set of encrypted utterances from second user device 108. In such an example, the first set of encrypted utterances may be encrypted according to an encryption protocol. In such an example, the encryption protocol may refer to a format of the utterances (e.g., an audio format). To determine a relevant set of computer files associated with the live conversation 202, the system may decrypt the first set of encrypted utterances into a textual format. For example, the system may use a second secured model (e.g., an audio-to-text model) implemented in a secured computing environment of system 300. The second secured model (e.g., the audio-to-text model) may be an automatic speech recognition model, sequence-to-sequence model, neural network, transformer-based model, or other artificial intelligence model configured to receive data representing audio as input and output data representing text as output. The system may generate the first set of decrypted utterances based at least in part on providing the first set of encrypted utterances into the second secured model. For example, the system may provide the first portion of encrypted utterances (e.g., utterances received from the second user device 108) to the second secured model trained to decrypt encrypted utterances (e.g., convert, translate, or transcribe audio utterances, etc.), where the second secured model generates a portion of decrypted utterances (e.g., first portion of decrypted utterances 206a) as output. The system may then combine the first portion of decrypted utterances 206a with a second utterances (e.g., second portion of decrypted utterances 206b) to form the first set of decrypted utterances 206a-206b. For example, the second utterances may be utterances from the first user 102 that are originally in an audio format, but then decrypted by the system (e.g., using the second secured model) to enable display of the first set of decrypted utterances on user interface 200. In other words, the system may employ the audio-to-text model to generate the first set of decrypted utterances 206a-206, the second set of decrypted utterances 208a-208b to generate transcript 204 for (i) display on user interface 200, and (ii) use in determining a set of relevant computer files associated with the live conversation 202.

It should be noted that, while the generation of the first set of utterances are described above, the same or similar processes may be applied to the second set of utterances. For example, as the live conversation 202 progresses in time and new data is received (e.g., subsequent sets of utterance-related data), the system may generate new sets of decrypted utterances for display on user interface 200 and for use in determining a set of relevant computer files associated with the live conversation. As such, transcript 204 may become larger in size and incorporate textual versions of utterances spoken by first user 102 and second user 106 as the live conversation 202 progresses in time.

In some embodiments, the system may extract sets of utterances from a super set of utterances. For example, in some embodiments, the first set of decrypted utterances 206a-206b and the second set of decrypted utterances 208a-208b may form a superset of utterances. As the live conversation 202 progresses in time, the system may focus on a subset of the superset of utterances. For example, the system may determine based on the superset of utterances, a portion of the superset of utterances that are associated with a first user identifier and a second portion of the superset of utterances that are associated with a second user identifier. To reduce utilization of computational resources when determining relevant computer files to the live conversation, the system extracts portions of the superset of utterances. For example, the system may extract only utterances that a given user (e.g., a customer) has provided during the live conversation. By doing so, the system may avoid convoluting the underlying context during the live conversation with the customer service agent's input - thereby focusing on determining relevant computer files related to the customers inquiries during the conversation. As such, the system may extract a set of utterances (e.g. set of decrypted utterances) associated with the customer (e.g., second user 106), such as first portion of decrypted utterances 206a and third portion of decrypted utterances 208a.

In some embodiments, the system may generate tokens associated with the live conversion. For example, as the live conversation 202 progresses, the system may generate tokens 209a-209b to preserve context of the live conversation 202 for use in determining sets of computer files relevant to live conversation 202. Tokens 209a-209b may be any of the tokens described above. For example, first token 209a and second token 209b may be a context token (e.g., a token comprising context of at least an utterance of a conversation). Tokens 209a-209b may be generated during the live conversation 202 and may be stored in a token vault database for later retrieval/use. The token vault database (not shown) may be part of system 300 (FIG. 3). Token vault database may store tokens that may be searched for, retrieved, or otherwise accessed during the live conversation.

Tokens 209a-209b may include information associated with the live conversation. For example, each token may include token data. The token data may indicate (i) a token identifier, (ii) a token timestamp, (iii) a set of decrypted utterances, or other information, in accordance with one or more embodiments. A token identifier may be a value (e.g., alphanumeric, numeric, string, set of characters, etc.) that uniquely identifies a token. The token timestamp may be a timestamp indicating a time at which the token is generated. In some embodiments, the token timestamp may indicate a time associated with a set of utterances. The token data may additionally indicate a set of decrypted utterances. For example, the token data may include an embedding of a set of utterances part of transcript 204. As an example, the system may generate an embedding representing the first portion of decrypted utterances 206a and second portion of decrypted utterances and store the embedding as part of (or in association with a given token). In some embodiments, the embedding may represent a compressed version of information included in a set of utterances. For example, in a financial services embodiment, the embedding may indicate financial information discussed up until the token is generated (or between generated tokens), a loan or payment discrepancy, an indication of fraud, accessing a customer's financial account, supporting statements, resolutions to a given problem the customer is facing, helpful information for resolving a problem the customer is facing, prior solutions to a problem the user is facing, or other financial services-related information. By doing so, the system may reduce the amount of computer memory utilized when storing tokens as the tokens may include embeddings of one or more utterances. In some embodiments, the system may store a pointer indicating a set of utterances. For example, the system may store a pointer (e.g., a memory pointer) in the token that points to a memory location (e.g., address) storing the corresponding utterances. By doing so, the system may reduce the amount of computer processing power used to preserve context by foregoing the generation of an embedding of the set of utterances. Additionally or alternatively, the system may store a representation of the utterances themselves in the token (e.g., as part of the token data).

In some embodiments, during a live conversation (e.g., live conversation 202), the system may receive a first set of decrypted utterances (e.g., natural language utterances) spoken within a first time period of the live conversation. For example, first user 102 may converse with second user 106 via first user device 104 and second user device 108, respectively. The system may receive first set of decrypted utterances 206a-206b. The system may then generate a token (e.g., first token 209a) including the token data (e.g., as described above), which may include a unique identifier for the token, an embedding of the first set of decrypted utterances 206a-206b, and a timestamp indicating the time at which the token is generated. Additionally or alternatively, a second timestamp indicating the time at which the first set of decrypted utterances are received/spoken may also be part of the token data. In some embodiments, the system may provide the first set of decrypted utterances 206a-206b to an artificial intelligence model configured to generate embeddings (e.g., an embedding model, a large language model, Word2Vec, GloVE, FastText, ELMo, BERT, RoBERTa, DistilBERT, ALBERT, USE, InferSent, SBERT, CLIP, ALIGN, Multimodal transformers, etc.), and store such generated embeddings as part of the token data. Upon generating the token associated with the first set of decrypted utterances 206a-206b, the system may store the token in the token vault database (not shown) for later retrieval.

In some embodiments, the system may determine one or more tokens. When determining (e.g., retrieving, searching for, identifying, etc.) a set of relevant computer files associated with a live conversation, the system (e.g., system 300) may determine a token based on a subset of tokens. For example, the system may determine a timestamp associated with a set of utterances part of live conversation 202. As the live conversation 202 progresses, user interface 200 may generate transcript 204, which may include first set of decrypted utterances 206a-206b and second set of decrypted utterances 208a-208b. To preserve the context of the live conversation 202 as the live conversation 202 progresses for use in determining a set of relevant computer files to be displayed to a user, the system may determine the timestamp associated with a set of utterances (e.g., second set of decrypted utterances 208a-208b). The system may also retrieve, from a token vault database, a set tokens associated with the live conversation 202. For example, the system may query the token vault database to retrieve a set of tokens that are associated (e.g., have been generated during) the live conversation 202. The system may determine, based on the set of retrieved tokens, a subset of tokens associated with a timestamp that is earlier than the timestamp associated with the set of utterances.

As will be explained later, while the system may provide decrypted utterances (or embeddings thereof) to one or more models during the live conversation 202 to determine relevant computer files, the system may preserve context of the live conversation 202 by providing token data to such models in addition to the latest set of utterances communicated during the live conversation 202. As such, the system may determine a subset of tokens that have been generated earlier than the latest set of utterances communicated during the live conversation 202. By way of example, the system may determine first token 209a (e.g., as the subset of tokens) from a set of stored tokens based on the second set of decrypted utterances 208a-208b being the most up to date set of utterances communicated during the live conversation. The system may then determine a token based on the subset of tokens. For example, because the second set of decrypted utterances 208a-208b are the latest set of utterances, the system may determine one or more tokens (e.g., first token 209a) that is associated with another set of decrypted utterances that were communicated earlier in the live conversation 202 to enhance conversational context when determining relevant computer files to be retrieved or displayed during the live conversation. It should be noted, that although one token is being retrieved in this example as the subset of tokens, that the system may retrieve a plurality of tokens (e.g., that have been generated earlier than the latest set of utterances) as the subset of tokens. By doing so, the system may use a plurality of tokens to provide further contextual information related to the live conversation, thereby enhancing relevant computer file determination and accuracy via preserved conversational context. Additionally or alternatively, the system may determine the latest generated token. For example, the system may determine, based on the subset of tokens, a token that is associated with the latest timestamp respective to the subset of tokens. For example, the system may parse the subset of tokens to determine which token has most recently been generated. The system may then determine the token based on the most recently generated token. By doing so, the system may reduce the utilization of computer processing resources by using a single parameter in which to base the determination of the token on.

In some embodiments, the system may generate one or more new tokens based on previously generated tokens to reduce utilization of computer memory. For example, the system may determine, based on a subset of tokens, a plurality of sets of utterances, where each set of utterances of the plurality of sets of utterances correspond to a respective token of the subset of tokens. For example, to maintain conversational context for determining relevant computer files to the live conversation while also reducing the amount of computer memory used when storing such tokens, the system may generate updated tokens based on the live conversation. As an example, where the subset of tokens include four tokens that have been generated during the live conversation 202, the system may generate a new token that encompasses the token data of the four tokens. In some embodiments, upon generating the new token, the system may replace, delete, or remove the four tokens from the token vault database to preserve computer memory resources.

To do so, the system may determine, based on a subset of tokens, a plurality of sets of utterances, where each set of utterances of the plurality of sets of utterances correspond to a respective token of the subset of tokens. For example, the subset of tokens may be previously generated tokens with respect to prior sets of utterances communicated during the live conversation 202. The system may determine the plurality of sets of utterances by retrieving token data associated with each token of the subset of tokens from the token value database. In one example, the system may retrieve, for each token of the subset of tokens, the embedding corresponding to a set of utterances associated with a respective token of the subset of tokens. The system may then provide the respective embeddings to an artificial intelligence model (e.g., an autoencoder, decoder, etc.) to determine the set of utterances corresponding to the respective embedding. In another example, the system may retrieve the set of utterances directly from the token data itself (e.g., where the token data stores the utterances themselves). In yet another example, the system may retrieve the embeddings themselves for use in re-embedding the respective embeddings. In a further example, the system may retrieve the utterances from a database storing the plaintext versions of the utterances in association with the subset of tokens.

The system may then generate a new token based on the subset of tokens. The new token may be generated in a process that is similar, or the same as those outlined above. The new token may include new token data indicating (i) a first token timestamp associated with a token (e.g., of the subset of tokens) having the earlier timestamp respective to the subset of tokens, (ii) a second token timestamp associated with a token (e.g., of the subset of tokens) having the latest/most recent timestamp respective to the subset of tokens, (iii) a new token identifier (e.g., to uniquely identify the new token), and (iv) an indication of a new set of utterances corresponding to the plurality of sets of utterances (e.g., of the subset of tokens). For example, the indication of a new set of utterances may be a combination of the utterances respective to the subset of tokens, an embedding of the embeddings indicated in the token data of the subset of tokens, or an embedding of the utterances of the subset of tokens. The system may store the new token in the token vault database. The system may then use the new token in lieu of one or more of the subset of tokens for use in (i) preserving the conversational context of the live conversation and (ii) determining relevant computer files to the live conversation. In some embodiments, as described above, the system may replace, remove, or delete the subset of tokens in response to storing the new token (e.g., representing the tokens of the subset of tokens) in the token vault database. By doing so, the system may conserve computer memory resources utilized when storing context data of the conversation.

In some embodiments, the system may generate tokens based on an amount of utterances. For example, the system may determine an amount of utterances of a set of utterances communicated during the live conversation 202. By way of example, the system may determine that the first set of decrypted utterances 206a-206b include two utterances. In response to determining that the amount of utterances satisfies a threshold amount of utterances (e.g., a predetermined amount of utterances) the system may generate a token corresponding to the set of utterances (and then store the generated token in a token vault database). The amount of utterances may satisfy the threshold amount of utterances where the amount of utterances meets or exceeds the threshold time period. For example, the system may generate first token 209a based on the first set of decrypted utterances 206a-206b satisfying the threshold amount of utterances. By doing so, the system may generate tokens in real time during the conversation to provide up-to-date conversational context information to one or more models. In some embodiments, the system may provide a set of utterances to one or more models based on an amount of utterances satisfying the threshold amount of utterances. For example, as will be explained later, the system may provide the first set of decrypted utterances 206a-206b to an artificial intelligence model to generate one or more queries, subsets of utterances (e.g., keywords), or retrieve a set of computer files based on the first set of decrypted utterances 206a-206b satisfying the threshold amount of utterances. By doing so, the system may facilitate real-time computer file retrieval related to context provided during the live conversation, thereby (i) improving accuracy of relevant computer files retrieved and (ii) enhancing the user experience.

In some embodiments, the system generates tokens based on a time period. For example, the system may determine a first time period associated with utterances communicated during the live conversation 202. By way of example, the system may determine that the first set of decrypted utterances 206a-206b have been communicated over a time period of 30 seconds. In response to determining that the time period satisfies a threshold time period (e.g., a predetermined time period) the system may generate a token corresponding to the set of utterances (and then store the generated token in a token vault database). The time period may satisfy the threshold time period where the time period meets or exceeds the threshold time period. For example, the system may generate first token 209a based on the first set of decrypted utterances 206a-206b being communicated within the time period that satisfies the threshold time period. The system may then provide the generated token to one or more models to facilitate relevant computer-file retrieval. By doing so, the system reduces convolution of conversational context that may be caused by a pause in conversation, thereby enhancing accuracy of determining relevant computer files to the conversation. In some embodiments, the system may provide a set of utterances to one or more models based on the first time period satisfying the threshold time period. For example, as will be explained later, the system may provide the first set of decrypted utterances 206a-206b to an artificial intelligence model to generate one or more queries, subsets of utterances (e.g., keywords), or retrieve a set of computer files based on the first set of decrypted utterances 206a-206b being communicated during the time period satisfying the threshold time period. By doing so, the system may facilitate real-time computer file retrieval related to context provided during the live conversation, thereby (i) improving accuracy of relevant computer files retrieved and (ii) enhancing the user experience.

As discussed above, user interface 200 may include one or more presentation regions 212a-212b to display (or otherwise present) a set of computer files 210a-210d to a user (e.g., first user 102). In some embodiments, only one presentation region may display one or more of the set of computer files 210a-210d. In some embodiments, more than two presentation regions may be present for presenting a set of computer files 210a-210d. For example, presentation regions 212a-212b, may include a main presentation region 212a and an auxiliary presentation region 212b. Main presentation region 212a may be used to display the most relevant computer file of a set of computer files. For example, first computer file 210a may be the most relevant computer file of the set of computer files 210a-210d. Therefore, first computer file 210a may be displayed in main presentation region 212a. Additionally or alternatively, second computer file 210b, third computer file 210c, and fourth computer file 210d may be displayed in auxiliary presentation region 212b. For example, auxiliary presentation region 212b may be used to display less relevant computer files of the set of computer files. In some embodiments, the relevancy of each computer file of the set of computer files 210a-210d may be determined based on one or more similarity values/metrics (e.g., of embeddings of utterances), relevancy values/metrics, ranking values, threshold values, or identified relevant documents, or other methods in accordance with one or more embodiments.

As an example, in a financial services embodiment, a customer and a customer service agent may be discussing how to change contact information associated with a bank account of the customer. During the conversation, as will be explained later, utterances communicated between the customer and customer service agent may be used to retrieve a set of relevant computer files. For example, the system may retrieve one or more help documents that provide instructions on how to change the customers contact information associated with their bank account. The system may further rank (e.g., rank based on relevancy) the one or more help documents and display the most relevant help document in the main presentation region 212a, while the other, less relevant help documents are displayed in the auxiliary presentation region 212b to enable the customer service agent (or in some embodiments, the customer) to view the retrieved help documents during the live conversation. By doing so, the customer service agent is enabled to help assist the customer in real time using automatically retrieved, relevant, documents associated with the utterances communicated during the live conversation.

In some embodiments, a computer file(s) displayed in the main presentation region 212a may appear larger than other computer file(s). For example, first computer file 210a may visually appear larger than second computer file 210b, third computer file 210c, and fourth computer file 210d. Computer file(s) displayed in the auxiliary presentation region 212b may appear smaller than other computer file(s) displayed in main presentation region 212a. By doing so, a user may reference relevant computer files with ease to assist another user during a live conversation. In some embodiments, computer file(s) presented in the auxiliary region may display a subset of information associated with the respective computer file(s) to reduce the amount of visual content displayed on the user interface 200. By doing so, the system may enable a user (e.g., a customer service agent) to focus on one or more portions of another computer file that is deemed more relevant to the live conversation, thereby enhancing the user experience.

In some embodiments, computer file(s) presented in the auxiliary presentation region 212b may be presented in a manner consistent with a relevancy ranking. For example, second computer file 210b may appear at the top of a stack as second computer file 210b may be more relevant than third computer file 210c and fourth computer file 210d. In some embodiments, user interface 200 may enable a user to select one or more of the computer files being presented within the presentation regions 212a-212b. For example, a user may select first computer file 210a to see an expanded view (e.g., a larger view) of first computer file 210a. As another example, a user may select third computer file 210c to see an expanded view of third computer file 210c. In some embodiments, when a user selects a computer file from the auxiliary presentation region, the selected computer file may replace a current computer file being displayed in the main presentation region. For example, if a user selects fourth computer file 210d from auxiliary presentation region 212b, fourth computer file 210d may replace first computer file 210a being presented in main presentation region 212a to enable the user to view an expanded view of fourth computer file 210d. By doing so, a user (e.g., a customer service agent) may view computer files that may have initially been deemed not as relevant as other computer files in an expanded view to assist another user (e.g., a customer) - thereby enhancing the user experience.

In some embodiments, a computer file may be displayed for a given time period. For example, as the live conversation 202 progresses and the system determines one or more relevant computer files to be displayed, the system may present computer files for a first time period. For example, the first time period may be a predetermined time period (e.g., 30 seconds, one minute, two minutes, etc.) or may be a dynamic time period. For example, the dynamic time period may be based on determining that a more relevant computer file is determined (e.g., a higher ranked computer file with respect to current computer files being displayed, another computer file is determined to be relevant to the conversation, etc.). By way of example, the system may retrieve (e.g., based on one or more computer file identifiers, a similarity value/metric, a relevancy value/metric, etc.) a computer file. The system may then generate for display, on the user interface (e.g., user interface 200), the computer file during the live conversation 202 for the first time period. For instance, the first computer file 210a may be displayed in the main presentation region 212a until another document (e.g., not shown) is determined by the system to be more relevant than first computer file 210a, where the system may replace the display of the first computer file 210a with the other document. By doing so, the system ensures that users are presented with the most relevant computer files to the conversation, thereby enhancing the user experience.

In some embodiments, the system may display a placeholder computer file. To reduce inundating users (e.g., first user 102) with irrelevant information (e.g., computer files) during the conversation, the system may display a placeholder computer file during instances where utterances communicated during the conversation are irrelevant, or otherwise not associated with any computer files stored in a database hosting computer files that can be retrieved. For example, the conversations may include phatic expressions (e.g., utterances, phrases, etc.) that may not be relevant to a purpose of a conversation. Phatic expressions may refer to social functions of language, and may include utterances such as "hi," "hello," "how are you," "goodbye," "it was great talking to you" or other expressions/phrases that are not relevant to the main purpose of a dialogue, but rather serve as introductions, closings, filler phrases, greetings, politeness routines, casual remarks, or acknowledgements. In the context of determining relevant computer files for a conversation, such phatic expressions may inundate users with irrelevant computer files being displayed during the live conversation, which may cause confusion or decrease the user experience (e.g., due to a large amount of irrelevant computer files being displayed). As such, the system may display a placeholder computer file when such phatic expressions are detected. For example, the system may detect (e.g., via one or more models, natural language processing models, embedding models, etc.) that a phatic utterance/phrase is communicated during the live conversation. In response to detecting (or otherwise determining) a phatic utterance is communicated during the live conversation, the system may display a placeholder computer file on user interface 200.

For example, a placeholder computer file may be an empty computer file (e.g., a null computer file), a blank document, or a default computer file. In some embodiments, the placeholder computer file may be displayed on user interface 200 when a phatic expression is detected. In other embodiments, the placeholder computer file may be displayed only when there has not been another computer file determined to be relevant to the conversation prior to the phatic expression being detected. As an example, first set of decrypted utterances 206a-206b may be phatic expressions/utterances. Initially, the system may display the placeholder document (e.g., in main presentation region 212a) during the live conversation 202 to be presented to a user. Second set of decrypted utterances 208a-208b may represent non-phatic expressions/utterances. Upon the system determining one or more relevant computer files to be displayed that are related to second set of decrypted utterances 208a-208b (e.g., set of computer files 210a-210d), the system may replace the placeholder document with one or more of the relevant computer files. However, if another phatic expression/utterance is detected subsequent to the most recently presented relevant computer files being displayed (e.g., set of computer files 210a-210d), then the system may forego displaying the placeholder computer file in lieu of leaving the most recently presented relevant computer files being displayed.

The user interface may also include one or more data fields or buttons relevant to determining computer files relevant to a live conversation. For example, user interface 200 may include a search term field for search term 214 and a search button 216. Search term field may be a data field configured to accept, as input, one or more queries or other search terms related to determining computer files. Search button 216 may be a user interface element that enables or otherwise facilitates search of computer files. In some embodiments, search term field may be automatically populated with one or more determined or user-provided queries, search terms, keywords, or other textual information, in accordance with one or more embodiments. Search button 216 may be used to enact a search on one or more databases based on data within the search term field. For example, a user may select search button 216 to query the one or more databases based on a query of search term field. In some embodiments, a user may input data into search term field. However, in other embodiments, one or more models (e.g., as described herein) may generate or otherwise determine a query (or other keywords) that may be used to search the one or more databases (not shown). For example, an artificial intelligence model may generate a query based on utterances communicated during the live conversation 202, and may populated the generated query into the search term field. By doing so, not only may queries be automatically generated based on the live conversation 202, but users may have the opportunity to modify the query prior to facilitating a search for one or more computer files - thereby enhancing the user experience. Additionally or alternatively, the search may be facilitated automatically. For example, as opposed to requiring a user selection of search button 216, the system may automatically facilitate the search using the data in search term field - further enhancing the user experience. In other embodiments, the data (e.g., query) generated for search term field may be presented for a threshold amount of time (e.g., 1 second, 5 seconds, etc.) prior to automatically effectuating a search, thereby enabling users the opportunity to modify the generated query, in accordance with one or more embodiments. In some embodiments, upon effectuating the search, a set of computer files 210a-210d may be displayed via the user interface 200 determined to be relevant to the live conversation 202 based on the data inputted or populated into the search term field, in accordance with one or more embodiments.

FIG. 3 shows illustrative components for a system used to facilitate information retrieval during a live conversation, in accordance with one or more embodiments. As shown in FIG. 3, system 300 may include mobile device 322 and user terminal 324. While shown as a smartphone and personal computer, respectively, in FIG. 3, it should be noted that mobile device 322 and user terminal 324 may be any computing device, including, but not limited to, a laptop computer, a tablet computer, a hand-held computer, and other computer equipment (e.g., a server), including "smart," wireless, wearable, and/or mobile devices. In some embodiments, mobile device 322 may correspond to first user device 104 (FIG. 1). In some embodiments, user terminal 324 may correspond to second user device 108 (FIG. 1). FIG. 3 also includes cloud components 310. Cloud components 310 may alternatively be any computing device as described above, and may include any type of mobile terminal, fixed terminal, or other device. For example, cloud components 310 may be implemented as a cloud computing system, and may feature one or more component devices. As another example, cloud components 310 may operate as a server system that may perform one or more operations as described herein. It should also be noted that system 300 is not limited to three devices. Users may, for instance, utilize one or more devices to interact with one another, one or more servers, or other components of system 300. It should be noted, that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., conversational responses, queries, search results, search terms, utterances, transcripts, computer files, user interfaces, and/or notifications).

Additionally, as mobile device 322 and user terminal 324 are shown as touchscreen smartphones, these displays also act as user input interfaces. It should be noted that in some embodiments, the devices may have neither user input interfaces nor displays, and may instead receive and display content using another device (e.g., a dedicated display device such as a computer screen, and/or a dedicated input device such as a remote control, mouse, voice input, etc.). Additionally, the devices in system 300 may run an application (or another suitable program). The application may cause the processors and/or control circuitry to perform operations related to generating dynamic conversational replies, queries, and/or notifications.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 310 may include one or more components of environment 100 (FIG. 1) or user interface 200 (FIG. 2). For instance, cloud components 310 may include a server that performs one or more operations related to determining, retrieving, identifying, or displaying computer files associated with a conversation, in accordance with one or more embodiments.

Cloud components 310 may access one or more databases. For example, cloud components 310 may include one or more databases (or otherwise access one or more databases) such as a token vault database (e.g., storing one or more tokens, token data, timestamps, token identifiers, pointers to utterances, utterance embeddings, or other token-related information), a system database (e.g., storing decrypted utterances, timestamps, progenerated queries, graphical representations of computer files, public/private keys, threshold values, metrics, error indications, embeddings, user identifiers, embedding spaces, subsets of utterances, keywords, or other system information, LLM prompts), a computer file database (e.g., storing one or more computer files), model database (e.g., storing one or more artificial intelligence models such as LLMs, neural networks, bifurcated models, secured models, encoders, decoders, audio-to-text models, text-to-audio models, document rankers, relevancy evaluation models, natural language processing models, or other artificial intelligence models), model training databases (e.g., storing training data for artificial intelligence models, positive and negative examples, labeled data, or other model training data), or other databases, in accordance with one or more embodiments.

Cloud components 310 may include model 302, which may be a machine learning model, artificial intelligence model, etc. (which may be referred collectively as "models" herein). Model 302 may take inputs 304 and provide outputs 306. The inputs may include multiple datasets, such as a training dataset and a test dataset. Each of the plurality of datasets (e.g., inputs 304) may include data subsets related to user data, predicted forecasts and/or errors, and/or actual forecasts and/or errors. In some embodiments, outputs 306 may be fed back to model 302 as input to train model 302 (e.g., alone or in conjunction with user indications of the accuracy of outputs 306, labels associated with the inputs, or with other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., a query, a subset of utterances, one or more keywords, a computer file identifier, relevancy values, relevancy error, an utterance embedding, a computer file embedding, etc.).

In a variety of embodiments, model 302 may update its configurations (e.g., weights, biases, or other parameters) based on the assessment of its prediction (e.g., outputs 306) and reference feedback information (e.g., user indication of accuracy, reference labels, or other information). In a variety of embodiments, where model 302 is a neural network, connection weights may be adjusted to reconcile differences between the neural network's prediction and reference feedback. In a further use case, one or more neurons (or nodes) of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

In some embodiments, model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 302 may be self-learning and trained, rather than explicitly programmed, and can perform significantly better in certain areas of problem solving, as compared to traditional computer programs. During training, an output layer of model 302 may correspond to a classification of model 302, and an input known to correspond to that classification may be input into an input layer of model 302 during training. During testing, an input without a known classification may be input into the input layer, and a determined classification may be output.

In some embodiments, the model (e.g., model 302) may be a secured model. For instance, the secured model may be secured in a secured computing environment that is protected via one or more firewalls, antivirus software, encryption protocols, intrusion detection and prevention systems, authentication mechanisms, or the like. For example, system 300 may indicate a secure computing environment. By doing so, the system may provide a secure environment for training or using secured models - thereby mitigating the risk of malicious obtainment of proprietary data. In some embodiments, the model (e.g., model 302) may comprise a Large Language Model (LLM). In some embodiments, the model may comprise a bifurcated model (e.g., a model comprising two or more sub-models, a model comprising one or more model portions, a model comprising one or more layer sets (e.g., sets of layers each configured for a given purpose, etc.).

In some embodiments, model 302 may include multiple layers (e.g., where a signal path traverses from front layers to back layers). In some embodiments, back propagation techniques may be utilized by model 302 where forward stimulation is used to reset weights on the "front" neural units. In some embodiments, stimulation and inhibition for model 302 may be more free-flowing, with connections interacting in a more chaotic and complex fashion. During testing, an output layer of model 302 may indicate whether or not a given input corresponds to a classification of model 302 (e.g., a query, a subset of utterances, one or more keywords, a computer file identifier, relevancy values, relevancy error, an utterance embedding, a computer file embedding, etc.).

In some embodiments, the model (e.g., model 302) may automatically perform actions based on outputs 306. In some embodiments, the model (e.g., model 302) may not perform any actions. The output of the model (e.g., model 302) may be used to perform a search on a database, identify a set of computer files, display a set of computer files, provide sets of utterances to the model, retrieve a token, generate a token, or other actions.

System 300 also includes API layer 350. API layer 350 may allow the system to generate summaries across different devices. In some embodiments, API layer 350 may be implemented on mobile device 322 or user terminal 324. Alternatively or additionally, API layer 350 may reside on one or more of cloud components 310. API layer 350 (which may be A REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of its operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 350 may use various architectural arrangements. For example, system 300 may be partially based on API layer 350, such that there is strong adoption of SOAP and RESTful Web-services, using resources like Service Repository and Developer Portal, but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: Front-End Layer and Back-End Layer where microservices reside. In this kind of architecture, the role of the API layer 350 may provide integration between Front-End and Back-End. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open source API Platforms and their modules. API layer 350 may use a developer portal. API layer 350 may use strong security constraints applying WAF and DDoS protection, and API layer 350 may use RESTful APIs as standard for external integration.

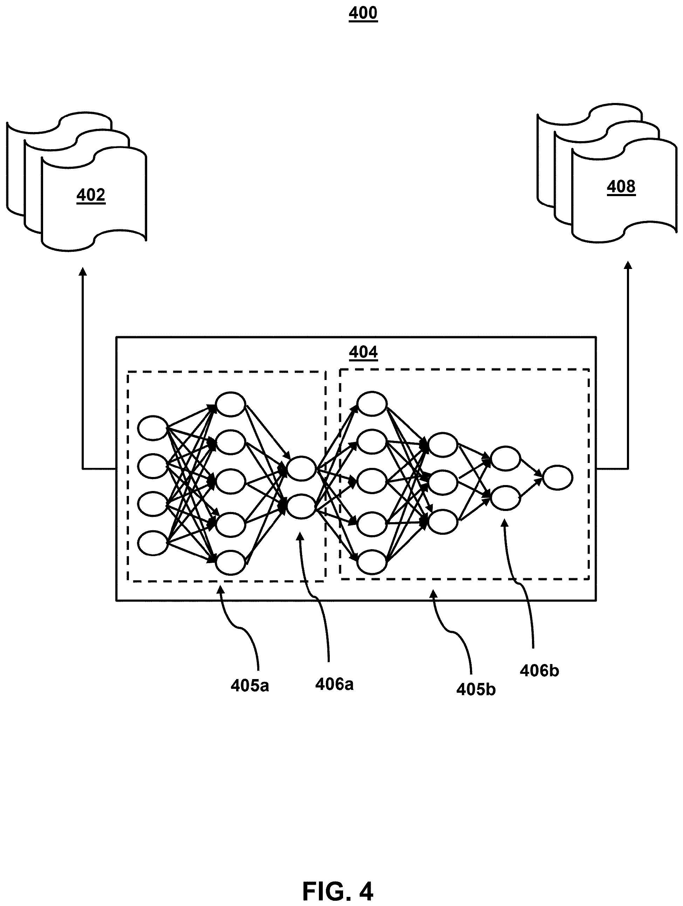

FIG. 4 shows an illustrative diagram of an artificial intelligence model used to facilitate one or more operations, in accordance with one or more embodiments. For example, diagram 400 shows an artificial intelligence model 404, which may correspond to model 302 (FIG. 3). In some embodiments, artificial intelligence model 404 may be a secured model, such as bifurcated neural network implemented in a secure computing environment. Diagram 400 shows input data 402 and output data 408. Diagram 400 also shows first bifurcated model portion 405a, second bifurcated model portion 405b, first intermediate output 406a, and second intermediate output 406b. In some embodiments, first bifurcated model portion 405a and second bifurcated model portion 405b may be part of a whole (e.g., part of model 404). For example, first bifurcated model portion 405a and second bifurcated model portion 405b may include one or more layers. In some embodiments, the layers may be distinct from each other with respect to each of the first bifurcated model portion 405a and second bifurcated model portion 405b. However, in some embodiments, one or more layers may be shared amongst first bifurcated model portion 405a and second bifurcated model portion 405b. Although not shown, other layers of model 404 may exist, and model 404 is not merely limited to solely first bifurcated model portion 405a and second bifurcated model portion 405b. For example, other layers of model 404 may exist to perform one or more other operations as described herein, in accordance with one or more embodiments.

Input data 402 may include utterances, such as decrypted utterances, natural language utterances, or training utterances (e.g., for use during a training routine), embeddings of utterances, token data (e.g., indicating utterances, embeddings of utterances, timestamps corresponding to utterances,) or other information associated with utterances (e.g., timestamps). Model 404 may be configured to generate output data 408 based on input data 402. For example, output data 408 may include one or more computer file identifiers that correspond to one or more utterances of input data 402. Model 404 may be configured to generate intermediate outputs. For example, intermediate outputs may refer to data generated by model 404 that is used to generate a final output (e.g., output data 408). Model 404 may use one or more intermediate outputs to generate other intermediate outputs, which in turn, are used to generate the final output (e.g., output data 408). First intermediate output 406a may include one or more utterance embeddings corresponding to utterances provided as input data 402. Second intermediate output 406b may include one or more computer file embeddings that are associated with the first intermediate output 406a that model 404 generates.

As will be discussed later, first bifurcated model portion 405a may include a first embedding model, and second bifurcated model portion 405b may include a second embedding model. The first embedding model may be configured to generate embeddings of utterances (e.g., decrypted utterances) provided as input to model 404. The second embedding model may be configured to generate embeddings of computer files based on (i) computer files stored in a database or (ii) the utterance embeddings generated via model 404. For example, the second embedding model may be trained to map embeddings of utterances spoken during a live conversation into computer file embeddings of computer files stored in a computer file database. For example, the first bifurcated model portion 405a may be associated with a dynamic embedding space and the second bifurcated model portion 405b may be associated with a static embedding space. For example, although the first embedding model and the second embedding model may maintain separate embedding spaces, model 404 may be trained such that the first embedding model learns to generate utterance embeddings that correspond to the computer file embeddings as generated via the second embedding model. By doing so, the generated utterance embeddings may be directly compared to the generated computer file embeddings (e.g., to determine a similarity metric) - thereby enabling identification of relevant computer files to a live conversation. Furthermore, by doing so, the system facilitates a dynamic embedding space that is learned relative to a static embedding space. In other words, the first bifurcated model portion 405a learns embeddings (e.g., dynamic) with respect to/based on a constant (e.g., static) embedding space of the second bifurcated model portion. This in turn enables the system to maintain separate, yet directly comparable embedding spaces for retrieving relevant information to a live conversation.

In some embodiments, model 404 (or other components not shown) may generate a similarity metric between embeddings. For example, model 404 may be configured to generate a similarity value based on a Cosine similarity, Euclidean Distance similarity, Manhattan Distance, Dot Product similarity, Jaccard similarity, Hamming distance, Mahalanobis distance, or other similarity metric. As an example, model 404 may generate a similarity metric between one or more utterance embeddings and one or more computer file embeddings. The system may determine whether the similarity metric satisfies a similarity threshold. For example, the similarity threshold may be a predetermined threshold value. The similarity metric may satisfy the similarity threshold where the similarity metric meets or exceeds the similarity threshold value. By doing so, the system may identify a relevant computer file to one or more utterances communicated during the live conversation - thereby facilitating real-time information retrieval based on utterances communicated during the live conversation as the conversation progresses.

In some embodiments, model 404 may be trained. For example, model 404 may be trained during a training routine using a set of training data. The set of training data may be retrieved from model training database as described above. For example, the set of training data may include positive and negative training examples. The system may retrieve a set of positive training examples and a plurality of sets of negative training examples. Each positive training example may be associated with a given set of negative training examples (e.g., of the plurality of sets of negative training examples). For example, a positive training example may include a pair of (i) a target utterance embedding from a training conversation (e.g., a historical live conversation) and (ii) a target computer file embedding of a set of computer file embeddings. The target utterance embedding may be an embedding of at least one utterance communicated (e.g., spoken) during the training conversation, and the target computer file embedding may be an embedding of a computer file that is related to the at least one utterance. As such, the positive training example reflects an example that the model may use during training to enable the model to determine that when an utterance that is the same as, or similar to the target utterance is spoken during a conversation, that the model is able to identify the computer file associated with that utterance.

A negative training example may include a pair of (i) the target utterance embedding from the training conversation and (ii) an untargeted computer file embedding of the set of computer file embeddings. For example, as opposed to the positive training example that pairs a target utterance embedding with a target computer file embedding (e.g., to direct the model to learn that when the same or similar utterance is detected, that the model should identify the target computer file corresponding to the target computer file embedding), the negative training example reflects an example of where when an utterance that is the same as, or similar to the target utterance is spoken during a conversation, that the model should not identify the untargeted computer file as being associated with that utterance. In other words, the negative training examples are used to enable the model to learn that when the target utterance is detected (e.g., during an inference operating mode, during a live conversation, etc.), that the model should not identify any of the other computer files of the set of computer files as being relevant to the target utterance. By using the positive and negative examples, the system is able to train the first bifurcated model portion to identify relevant computer files for reference during a conversation that are related to utterances spoken during the conversation. Additionally, as described above, by doing so, the system enables the first bifurcated model portion to reorganize the dynamic embedding space associated with the first bifurcated model portion based on utterance embeddings and the computer file embeddings without the need to also train the second bifurcated model portion (e.g., associated with the static/fixed embedding space), thereby conserving computational resources expended during model training.

As such, during the training routine, the system may retrieve a positive training example including a target utterance embedding from a training conversation associated with a target computer file embedding of a set of computer file embeddings. The system may also retrieve a set of negative training examples, where each negative training example includes the target utterance embedding from the training conversation associated with an untargeted computer file embedding of the set of computer file embeddings. The system may provide the positive training example and the corresponding set of negative training examples as input data 402 to the model 404. The first bifurcated model portion 405a may generate a candidate utterance embedding as an intermediate output (e.g., first intermediate output 406a) and the second bifurcated model portion 405b may generate a candidate computer file embedding (e.g., second intermediate output 406b). The system may generate a loss based on (i) the positive training example and the set of negative training examples and (ii) the candidate utterance embedding generated via the first bifurcated model portion and the candidate computer file embedding. For example, to train the first bifurcated model portion to effectively reorganize its dynamic embedding space of utterance embeddings, the system computes a loss value (e.g., via a loss function, contrastive loss function, etc.) between (i) the positive and negative training examples and (ii) the candidate utterance embedding generated by the first bifurcated model portion 405a. In some embodiments, the system may also compute a loss value between (i) the positive and negative training examples and (ii) the candidate computer file embedding generated by the second bifurcated model portion 405b. The loss value may then be used to update one or more first parameters (e.g., weights or biases) of the first bifurcated model portion in lieu of updating one or more second parameters of the second bifurcated model portion. By doing so, the second bifurcated model portion (e.g., used to generate computer file embeddings of computer files) remains constant during the training routine.

In some embodiments, the positive and negative training examples may be generated using a contrastive data generator. For example, to overcome the large amount of computational resources that existing systems expend when manually creating training data, the system may leverage a contrastive data generator to generate the positive and negative example sets. For example, to train the bifurcated model, the system may generate a set of positive training examples and a plurality of sets of negative training examples (e.g., corresponding to a given positive training example) using a contrastive data generator. The contrastive data generator may receive unlabeled data as input (e.g., utterances, utterance embeddings, computer files, computer file metadata, computer file related data, computer file embeddings, etc.) and generate positive and negative examples based on such. In this way, the system may quickly generate a large corpus of training data to train the bifurcated model.

In some embodiments, the system may generate positive and negative training examples to train the bifurcated model. To overcome the technical deficiencies associated with contrastive learning, such as contrastive learning example quality, the system may generate positive and negative training examples where each negative training example includes (i) a target utterance embedding and (ii) an untargeted computer file embedding of each computer file stored in a database of computer files.

In other words, the system may generate negative training examples that use embeddings of each computer file that the second bifurcated model portion has access to (e.g., stored in the computer file database) that does not include the targeted computer file embedding. By doing so, the system generates high quality training examples by using each computer file embedding of the set of available computer file embeddings where the negative training examples includes each computer file embedding (e.g., of the set of computer file embeddings) except for the targeted computer file embedding. In this way, the system forces the first bifurcated model portion to reorganize or restructure its dynamic embedding space according to the second bifurcated model portion's static embedding space (i) forgoing training the second bifurcated model portion and (ii) reducing model overfitting/underfitting as the model relies on learning a single embedding space as opposed to learning multiple embedding spaces.

To do so, the system may generate a positive training example by selecting (i) a target utterance embedding from a training conversation and (ii) a target computer file embedding from the set of computer file embeddings. The system may then assign the positive training example a positive label. In some embodiments, the positive training example may be generated based on a user-input (e.g., a user assigned label, a user selected target utterance embedding, a user-selected target computer file embedding, etc.). However, in other embodiments, the positive training example may be generated via the contrastive data generator (as discussed above).

The system may then determine a set of untargeted computer file embeddings, where the set of untargeted computer file embeddings include each computer file embedding of the set of computer file embeddings but not the target computer file embedding of the positive training example. For example, the system may determine every computer file embedding of the set of computer file embeddings to be used in generating a negative (or a set of negative) training examples that do not include the target computer file embedding included in the positive training example. The system may then generate the set of negative training examples using (i) the target utterance embedding from the training conversation and (ii) each untargeted computer file embedding of the set of untargeted computer file embeddings. The system may assign each negative training example of the set of negative examples a negative label. In some embodiments, a user may generate the set of negative training examples (e.g., by manually selecting/determining the set of untargeted computer file embeddings, creating the set of negative training examples, assigning the negative training examples a negative label, etc.). However, as discussed above, the system may use the contrastive data generator to automatically generate the positive and negative training examples.

In some embodiments, the system may generate positive training examples in connection with a conversation. For example, the system may identify a user selection of a computer file selected during a live conversation (or a historical live conversation) in connection with an utterance embedding (e.g., target utterance embedding, an embedding of an utterance spoken during a live conversation within a threshold time period). For instance, a user may select a computer file during the conversation to view an expanded view of the computer file via user interface 200. The system may determine, based on the selected computer file, the computer file embedding corresponding to the selected computer file. For example, the system may retrieve an embedding of the selected computer file (e.g., from a database). Additionally or alternatively, the system may generate an embedding of the selected computer file. The system may then generate a positive training example including (i) the utterance embedding and (ii) the computer file embedding. By doing so, the system may incorporate feedback (whether from a historical live conversation, or from a live conversation currently happening) to generate additional positive training examples - thereby enhancing information retrieval accuracy when the model(s) are trained.

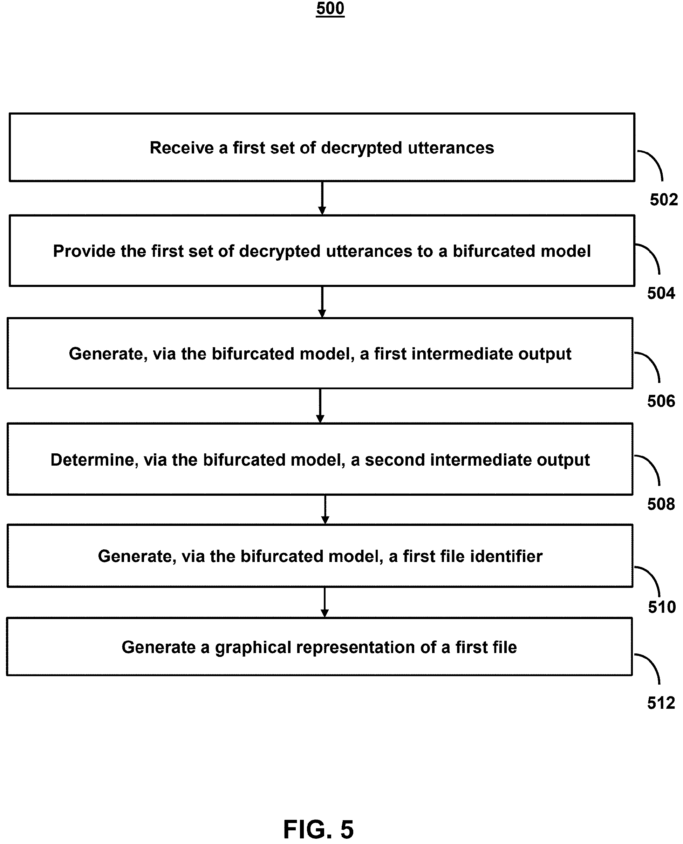

FIG. 5 shows a flowchart of the steps involved in improving information retrieval during a live conversation using queryless information retrieval via a bifurcated model implemented in a secured computer network, in accordance with one or more embodiments. For example, the system may use process 500 (e.g., as implemented on one or more system components described above) to generate computer file embeddings based on generated utterance embeddings of different embedding spaces to retrieve relevant information pertaining to a live conversation from databases.

At step 502, process 500 (e.g., using one or more components described above) may receive a first set of decrypted utterances. For example, the system (e.g., system 300) may receive, during a live conversation over a computer network, a first set of decrypted utterances. For example, the first set of decrypted utterances may be utterances communicated (e.g., spoken) during the live conversation. The first set of decrypted utterances may include natural language utterances spoken within a first time period during the live conversation. For example, the first set of decrypted utterances may be utterances spoken by a first user participating in the live conversation, and a second user participating in the live conversation. In some embodiments, as described above, upon receiving the first set of decrypted utterances, the system may generate a token based on the first set of decrypted utterances and store the generated token in a token vault database for later retrieval.

In a customer service embodiment, the first user may be a customer service agent and the second user may be a customer. The customer service agent and the customer may converse during a live conversation (e.g., via a telephone conference, a video conference, an instant messaging conference, etc.). The customer may be calling to discuss a problem (or other inquiry) that the customer is or has experienced, and the customer service agent may attempt to help resolve the customer's problem. Conventionally, customer service agents may leverage databases of available "help" information. To do so, the customer service agent may query the databases to retrieve relevant computer files (or other documents) to assist the customer. However, because the customer service agent is engaged in a conversation, it may be difficult to create queries on-the-fly, and the customer service agent may miss or otherwise misinterpret what the customer is communicating - thereby leading to ineffective queries. This in turn causes an increased amount of computational resources to be utilized when ineffective or otherwise incorrect queries are created and used to search databases due to (i) a large amount of queries being submitted to the databases from ineffective queries and (ii) the computing systems returning irrelevant documents to the customer's problem. Moreover, even in cases where DPR techniques are leveraged to improve LLM-RAG architectures, due to the nature of these systems being LLM-based, they are prone to hallucinated responses and rely on explicitly provided queries. However, in the context of live conversations, situations or other problems that a customer (or other user) needs help solving are often communicated implicitly, causing such models/architecture to misinterpret or otherwise ignore important conversational context of the live conversation - thereby decreasing the user experience. To overcome this, however, the system may first receive a set of utterances (e.g., portions of words, sounds, or other conversational elements) and provide the set of utterances to a bifurcated model to automatically retrieve relevant information to the live conversation to alleviate the customer service agent from the problems outlined above - thereby enhancing the user experience of both the customer and the customer service agent.

In some embodiments, the system may generate the first set of decrypted utterances. For example, the system may receive, during the live conversation, from a user device of a user, a first set of encrypted utterances. The first set of encrypted utterances may be encrypted via a first encryption protocol using a public key associated with another user device (e.g., a receiving device). For example, the first encryption protocol may be an asymmetric encryption protocol to enhance cybersecurity of the conversation. The system may decrypt the first set of encrypted utterances via a private key associated with the other user device. The system may generate the first set of decrypted utterances based on the decrypted first set of encrypted utterances and a second set of decrypted utterances.

For example, the second set of decrypted utterances may be utterances communicated by the other user device (e.g., the receiving device). For example, the user device of the user may be a customer's user device, and the other user device (e.g., the receiving device) may be that of a customer service agent. Because the other user device may be part of an entity's computing system used to determine a set of relevant computer files to aid the user (e.g., the customer), the system need not encrypt the utterances communicated by the customer service agent to generate the first set of decrypted utterances - thereby conserving computational resources that would otherwise be wasted when encrypting the utterances communicated by the customer service agent, just to be decrypted to generate the first set of decrypted utterances (e.g., to which the system will use to generate the queries and subsets of utterances, as explained later). As such, the system may generate the first set of decrypted utterances by combining or aggregating the decrypted first set of encrypted utterances and the second set of decrypted utterances. In some embodiments, however, the system may encrypt the second set of decrypted utterances to be sent to the user device (e.g., the customer's device) to facilitate the real-time conversation.

In some embodiments, the system may generate the first set of decrypted utterances based on an artificial intelligence model. For example, the system may receive, during the live conversation, a first set of encrypted utterances. In such an example, the first set of encrypted utterances may be natural language utterances spoken by a first user (e.g., a customer service agent) and a second user (e.g., a customer). For instance, the first set of encrypted utterances may be encrypted using a first encryption protocol. In such an example, the first set of encrypted utterances may be audio data of utterances spoken by the first and second user. To retrieve one or more computer files relevant to the live conversation automatically, the system may provide the audio data of the utterances to a second secured model, trained to decrypt encrypted spoken utterances, to generate the first set of decrypted utterances. For example, the second secured model may be an audio-to-text model that is part of a secured computing system (e.g., system 300 (FIG. 3)). By doing so, the system may transform the audio data of utterances communicated during the live conversation to a text format to be provided to one or more models configured to generate queries or subsets of utterances. Additionally, as existing information retrieval systems are not currently configured to accept real-time conversation information, the system may perform real time (or near-real time) batch generation of converted audio data to be provided to such models - thereby reducing information retrieval latency.

In some embodiments, the system may extract the first set of decrypted utterances from a second set of encrypted utterances. For instance, to focus retrieval of one or more computer files on a given user's utterances (e.g., the customers), the system may extract utterances from the second set of encrypted utterances based on a user identifier. As an example, where the second set of decrypted utterances includes both (i) utterances communicated by a customer and (ii) utterances communicated by the customer service agent, the system may determine user identifiers associated with the customer and the customer service agent. The user identifiers may be in the form of channel identifiers. For instance, during the live conversation, the customer and the customer service agent may speak over network 110 (FIG. 1) via communication channels configured to facilitate the live conversation. The communication channels may be labeled with user identifiers indicating users that transmit information (e.g., audio signals, data, utterances, etc.) to other parties during the conversation. The system may extract, for example, the first set of decrypted utterances from the second set of decrypted utterances based on the user identifier of the customer. By doing so, the system may filter utterances communicated during the conversation to reduce utilization of computer memory and processing power used to retrieve a relevant set of computer files to the live conversation.

At step 504, process 500 (e.g., using one or more components described above) may provide the first set of decrypted utterances to a bifurcated model. For example, the system may provide the first set of decrypted utterances as input to the bifurcated model (e.g., model 404 (FIG. 4)). The bifurcated model may be trained to generate computer file identifiers corresponding to utterances as output. To do so, the bifurcated model may comprise (i) a first bifurcated model portion associated with a dynamic utterance embedding space and (ii) a second bifurcated model portion associated with a static computer file embedding space. The first bifurcated model portion may be a first embedding model trained to generate utterance embeddings of the first set of decrypted utterances. The first embedding model may be associated with a dynamic utterance embedding space where utterance embeddings are learned with respect to a second embedding model. For example, the second bifurcated model portion may be a second embedding model trained to generate computer file embeddings of a set of computer files based on the generated utterance embeddings. For instance, the second bifurcated model portion may generate computer file embeddings of a set of computer files stored in a computer file database. The second bifurcated model portion may then use generated utterance embeddings (e.g., as generated via the first bifurcated model portion) to output a computer file embedding (e.g., based on the previously generated computer file embeddings in the static computer file embedding space of the model) corresponding to the generated utterance embeddings. For example, although the first embedding model and the second embedding model may maintain separate embedding spaces, the bifurcated model may be trained such that the first embedding model learns to generate utterance embeddings that correspond (e.g., map to) to the computer file embeddings as generated via the second embedding model. By doing so, the generated utterance embeddings may be directly compared to the generated computer file embeddings (e.g., to determine a similarity metric) - thereby enabling identification of relevant computer files to a live conversation.

In some embodiments, the second bifurcated mode portion (e.g., associated with the static computer file embedding space) may not be updated during a training routing related to the bifurcated model. For example, where the bifurcated model is to be updated (e.g., during a training routine), the system may facilitate an update process (e.g., a training routine) that is the same or similar to that as described in FIG. 4. For example, during a model update process, the system may only train the first bifurcated model portion such that the dynamic utterance embedding space associated with the first bifurcated model portion is updated during the training routine. To do so, the system may update one or more tunable parameters (e.g., configurations, weights, biases, etc.) of the first bifurcated model portion, but may forgo updating one or more tunable parameters of the second bifurcated model portion. For instance, as opposed to existing systems (e.g., as described above) that rely on training multiple models due to a shared embedding space, because the bifurcated model is able to maintain separate, yet comparable embedding spaces (e.g., to retrieve relevant computer files based on utterances communicated during the live conversation), the architecture of the bifurcated model enables single-model updates to occur as opposed to being required to retrain both models - thereby conserving valuable computational resources that would otherwise be wasted during dual-model updates.

In some embodiments, the system may provide the first set of decrypted utterances as input to the bifurcated model based on an amount of utterances. For example, the system may determine an amount of utterances of the first set of decrypted utterances spoken during the live conversation. The amount of utterances may be utterances communicated by a first user (e.g., a customer) or a second user (e.g., a customer service agent) during the live conversation. Additionally or alternatively, the amount of utterances may correspond to a conversational turn during the live conversation. For example, a customer may speak twice (e.g., two turns of conversing with another user, such as a customer service agent). In response to determining that the amount of utterances satisfies a threshold amount of utterances, the system may provide the first set of decrypted utterances as input to the bifurcated model. For example, the threshold amount of utterances may be a predetermined threshold amount (e.g., one utterance, two utterances, three utterances, ten utterances, one turn, two turns, etc.). By doing so, the system may reduce the amount of computer processing and memory resources expended by the model to identify a relevant computer file to the conversation by processing chunks of the conversation.

In some embodiments, the system may provide the utterances as input to the bifurcated model based on a time period. For example, the system may determine a first time period associated with the first set of decrypted utterances spoken during the live conversation. Similar to the above, the first set of decrypted utterances may be utterances communicated by a first user (e.g., a customer) or a second user (e.g., a customer service agent) during the live conversation. The system may monitor the time that a first utterance of the first set of decrypted utterances is spoken during the live conversation until a threshold time period is satisfied. For example, a first utterance of the first set of decrypted utterances may be spoken at 12:00:00 and the predetermined time period may be set to one minute. As such, once one minute passes from the time that the first utterance of the first set of decrypted utterances is spoken, the system may provide utterances spoken within the minute to as input to the bifurcated model. By doing so, the system may reduce the amount of computer processing and memory resources expended by the model to identify a relevant computer file to the conversation by processing chunks of the conversation.

At step 506, process 500 (e.g., using one or more components described above) may generate, via the bifurcated model, a first intermediate output. For example, in response to providing the first set of decrypted utterances as input to the bifurcated model, the system may generate, via the bifurcated model, a first intermediate output from the first bifurcated model portion indicating a first utterance embedding. For example, the first utterance embedding may be an embedding of the first set of decrypted utterances. As explained above, the first bifurcated model portion may be associated with a dynamic utterance embedding space that is organized according to the computer file embeddings generated via the second bifurcated model portion. As such, the first intermediate output may be comparable to embeddings generated via the second bifurcated model portion, although the first bifurcated model portion and the second bifurcated model portion maintain separate embedding spaces. By doing so, the system may provide the first utterance embedding as input to the second bifurcated model portion as input to generate a computer file embedding corresponding to the first utterance embedding.

In some embodiments, the system may generate a token comprising the first intermediate output for later retrieval when subsequent utterances are received. For example, the system may generate a token (e.g., a context token) based on the first set of decrypted utterances. The token may include the first utterance embedding (or the first set of decrypted utterances themselves) and a timestamp indicating a time at which (i) the first set of decrypted utterances are received by the system or (ii) when the first intermediate output (e.g., the first utterance embedding) is generated via the first bifurcated model portion. The system may store the token in a token vault database. By doing so, when the system receives, during the live conversation, a second set of decrypted utterances communicated during the live conversation that is subsequent to the first set of decrypted utterances, the system may retrieve the token from the token vault database (e.g., based on the timestamp associated with the generated token). The system may then provide the second set of decrypted utterances and at least a portion of the token data (e.g., the first intermediate output, the first utterance embedding, the first set of decrypted utterances, etc.) as input to the bifurcated model to generate a second output indicating a second computer file identifier. In this way, for example, the system may maintain contextual information previously discussed during the live conversation - thereby enhancing information retrieval accuracy of computer files relevant to the conversation.

At step 508, process 500 (e.g., using one or more components described above) may determine, via the bifurcated model, a second intermediate output. For example, the system may determine, via the bifurcated model, based on the first utterance embedding, a second intermediate output from the second bifurcated model portion indicating a first computer file embedding. As described above, the second bifurcated model portion may be associated with a static computer file embedding space. The second bifurcated model portion may be configured to receive utterance embeddings generated via the first bifurcated model portion to output a second intermediate output indicating computer file embeddings corresponding to the utterance embeddings generated via the first bifurcated model portion. As will be explained, this enables the first utterance embedding generated via the first bifurcated model portion to be compared to computer file embeddings generated by the second bifurcated model portion due to the training of the first bifurcated model portion generating/organizing its dynamic embedding space to align with that of the static embedding space of the second bifurcated model portion. In this way, when updates to the first bifurcated model portion are performed, the second bifurcated model portion need not be updated - thereby reducing the amount of computational resources that would otherwise be wasted in relation to existing systems reliance on shared embedding spaces between multiple models.

At step 510, process 500 (e.g., using one or more components described above) may generate, via the bifurcated model, a first file identifier. For example, the system may generate as output, via the bifurcated model, a first computer file identifier corresponding to the first computer file embedding based on a similarity metric between the first computer file embedding and the first utterance embedding satisfying a similarity threshold. For instance, the system may generate, via the bifurcated model, a similarity value (e.g., a similarity metric) by comparing the first computer file embedding to the first utterance embedding. For example, the system may compute the dot product between the first computer file embedding and the first utterance embedding. As described above, due to the bifurcated model architecture and training routine, although the first and second bifurcated model portions may maintain separate embedding spaces, the embedding spaces are nonetheless comparable as the first bifurcated model portion is trained to generate embeddings that correspond to computer file embeddings generated via the second bifurcated model portion - thereby enabling such similarity values to be accurately computed in connection with separate domains.

The system may then determine whether the similarity value satisfies a similarity threshold. For example, the similarity threshold may be a predetermined value (e.g., decimal, percentage, ratio, integer, etc.). The similarity value may satisfy the similarity threshold when the similarity value meets or exceeds the similarity threshold. In response to the similarity value satisfying the similarity threshold, the system may determine, via the bifurcated model, a first computer file identifier corresponding to the first computer file embedding. For example, the system may retrieve a computer file identifier using the first computer file embedding as stored in a computer file database. By doing so, the system may retrieve a computer file that is contextually relevant to the live conversation to aid the customer (or customer service agent) in solving one or more situations described during the live conversation.

At step 512, process 500 (e.g., using one or more components described above) may generate a graphical representation of a set of files. For example, the system (e.g., system 300) may generate, for display, on a user interface of a user device, during the live conversation, a graphical representation of a computer file corresponding to the first computer file identifier. In a customer service embodiment, the system may present a graphical representation of the computer file to a customer service agent to aid a customer with an inquiry or problem they are currently facing. For example, referring to FIG. 2, the computer file may correspond to one or more of the set of computer files 210a-210d. The system may display the graphical representation of the computer file within a threshold time period of the first time period (e.g., the time period at which the first set of decrypted utterances are spoken during the live conversation). The threshold time period may be a predetermined time period. For example, the system may display the computer file corresponding to the determined first computer file identifier within 5 seconds of the system receiving the first set of decrypted utterances to facilitate real-time information presenting to enable a customer service agent to view such computer files to help a customer solve a problem at hand - thereby enhancing the user experience. In some embodiments, the system may display the computer file as soon as the system retrieves the computer file (e.g., from the computer file database). In yet other embodiments, the system may display the graphical representation of the computer file until another/more relevant computer file is determined via the system (e.g., in response to a new set of decrypted utterances being provided to the bifurcated model). By doing so, the system may update the computer files being displayed as the conversation progresses, thereby improving the accuracy to which computer files are being displayed relevant to the context of the live conversation.

In some embodiments, the system may generate for display, a graphical representation of a null computer file. For example, the system may determine, via the bifurcated model, based on the first utterance embedding, an intermediate output from the second bifurcated model portion indicating a second computer file embedding, where the second computer file embedding is associated with a null computer file embedding. The system may then generate for display (e.g., on a user interface), a graphical representation of the null computer file. For instance, when phatic expressions are communicated during the live conversation, the system may provide such phatic expressions as input to the bifurcated model, and the bifurcated model may be configured to generate a placeholder computer file for display. The placeholder computer file may be an empty computer file that is generated for display until a non-phatic expression is processed by the bifurcated mode - resulting in one or more relevant computer files to be determined and then displayed on a user interface. By doing so, the system improves the user experience as the user is not inundated with irrelevant computer files stemming from phatic expressions communicated during the live conversation.

In some embodiments, the system may display multiple computer files determined as relevant to the conversation on the user interface. For example, the system may determine, via the bifurcated model, based on a second utterance embedding, a third intermediate output from the second bifurcated model portion indicating a second computer file embedding different from the first computer file embedding. For instance, as the conversation progresses, multiple computer files may be retrieved based on utterances being communicated during the live conversation. As such, the system may receive new utterances spoken during the live conversation and provide such new utterances to the bifurcated model to continually identify new, relevant, computer files to the conversation. As such, the first bifurcated model portion may generate a second utterance embedding (e.g., based on the new set of utterances communicated during the live conversation). The system may then generate, via the bifurcated model, a second computer file identifier corresponding to the second computer file embedding. For example, the system may determine a second similarity value between the second computer file embedding and the second utterance embedding. If the second similarity value satisfies the similarity threshold, the system may determine the second computer file identifier corresponding to the second computer file embedding. The system may then generate for display, on the user interface of the user device, during the live conversation, (i) the graphical representation of the computer file corresponding to the first computer file identifier and (ii) a graphical representation of another computer file corresponding to the second computer file identifier. For example, the system may display both the originally determined computer file (e.g., as relevant to the first set of decrypted utterances), as well as the newly determined computer file (e.g., as relevant to the new set of utterances). By doing so, the system may enhance the user experience as multiple relevant documents to the conversation are displayed to the user as the live conversation progresses.

In some embodiments, the system may display more relevant computer files in a main presentation region (e.g., main presentation region 212a (FIG. 2)) and less relevant computer files in an auxiliary presentation region (e.g., auxiliary presentation region 212b (FIG. 2)) of a user interface. Continuing with the example above, the system may determine that the second similarity value is greater than that of the first similarity value (e.g., determined in connection with the originally determined computer file). In response to the second similarity value being greater than the first similarity value, the system may present the newly determined computer file in the main presentation region of the user interface, and the originally determined computer file in the auxiliary presentation region of the user interface. In some embodiments, as the conversation progresses, the system may display relevant computer files in descending order according to the respective similarity values, where the computer file displayed on first or on top of the stack is the most relevant computer file of the set of other relevant computer files. By doing so, the system may enable the customer service agent to aid a customer handle a situation the customer is experiencing during the live conversation by being able to reference a corpus of relevant information to the customers situation - thereby enhancing both the customer and customer service agent's experience.

It is contemplated that the steps or descriptions of FIG. 5 may be used with any other embodiment of this disclosure. In addition, the steps and descriptions described in relation to FIG. 5 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 5.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method, the method comprising: receiving, during a live conversation over a computer network, a first set of decrypted utterances spoken during the live conversation; providing the first set of decrypted utterances as input to a bifurcated model, trained to generate computer file identifiers corresponding to utterances as output, the bifurcated model comprising (i) a first bifurcated model portion associated with a dynamic utterance embedding space and (ii) a second bifurcated model portion associated with a static computer file embedding space; in response to providing the first set of decrypted utterances as input to the bifurcated model, generating, via the bifurcated model, a first intermediate output from the first bifurcated model portion indicating a first utterance embedding; determining, via the bifurcated model, based on the first utterance embedding, a second intermediate output from the second bifurcated model portion indicating a first computer file embedding; generating as output, via the bifurcated model, a first computer file identifier corresponding to the first computer file embedding based on a similarity value between the first computer file embedding and the first utterance embedding satisfying a similarity threshold; and generating for display, on a user interface of a user device, during the live conversation, a graphical representation of a computer file corresponding to the first computer file identifier.
2. The method of any one of the preceding embodiments, wherein the bifurcated model is trained via a training routine, the training routine comprising: retrieving a positive training example comprising a target utterance embedding from a historical live conversation associated with a target computer file embedding of a set of computer file embeddings; retrieving a set of negative training examples, wherein each negative training example comprises the target utterance embedding from the historical live conversation associated with an untargeted computer file embedding of the set of computer file embeddings; generating a loss value based on (i) the positive training example and the set of negative training examples and (ii) an utterance embedding generated via the first bifurcated model portion; and updating one or more first parameters of the first bifurcated model portion based on the loss value in lieu of updating one or more second parameters of the second bifurcated model portion such that the one or more second parameters remain constant during the training routine.
3. The method of any one of the preceding embodiments, wherein the positive training example is of a set of positive training examples, the set of negative training examples is of a plurality of sets of negative training examples, and wherein each of the set of positive training examples and the plurality of sets of negative training examples are generated using a contrastive data generator.
4. The method of any one of the preceding embodiments, further comprising:
   generating the positive training example by selecting (i) the target utterance embedding from the historical live conversation and (ii) the target computer file embedding from the set of computer file embeddings; assigning the positive training example a positive label;
   determining a set of untargeted computer file embeddings, wherein the set of untargeted computer file embeddings comprise each computer file embedding of the set of computer file embeddings but not the target computer file embedding of the positive training example;
   generating the set of negative training examples using (i) the target utterance embedding from the historical live conversation and (ii) each untargeted computer file embedding of the set of untargeted computer file embeddings; and
   assigning each negative training example of the set of negative training examples a negative label.
5. The method of any one of the preceding embodiments, further comprising: identifying a user selection of a second computer file selected during the historical live conversation in connection with the target utterance embedding; determining, based on the second computer file, a second computer file embedding corresponding to the second computer file; and generating a second positive training example comprising (i) the target utterance embedding and (ii) the second computer file embedding.
6. The method of any one of the preceding embodiments, further comprising: retrieving during the live conversation, based on the first computer file identifier, the computer file corresponding to the first computer file identifier; and generating for display, on the user interface of the user device, during the live conversation, the graphical representation of the computer file corresponding to the first computer file identifier for a first time period.
7. The method of any one of the preceding embodiments, further comprising: determining, via the bifurcated model, based on the first utterance embedding, a third intermediate output from the second bifurcated model portion indicating a second computer file embedding, wherein the second computer file embedding is associated with a null computer file embedding; and generating for display, on the user interface of the user device, during the live conversation, a graphical representation of a null computer file corresponding to the null computer file embedding.
8. The method of any one of the preceding embodiments, further comprising: determining an amount of utterances of the first set of decrypted utterances spoken during the live conversation; and in response to determining that the amount of utterances satisfies a threshold amount of utterances, providing the first set of decrypted utterances as input to the bifurcated model.
9. The method of any one of the preceding embodiments, further comprising: determining a first time period associated with the first set of decrypted utterances spoken during the live conversation; and in response to determining that the first time period satisfies a threshold time period, providing the first set of decrypted utterances as input to the bifurcated model.
10. The method of any one of the preceding embodiments, further comprising: generating a token comprising the first intermediate output associated with a timestamp indicating a time at which the first intermediate output is generated via the first bifurcated model portion;
   storing the token in a token vault database; in response to receiving, during the live conversation over the computer network, a second set of decrypted utterances spoken during the live conversation subsequent to the first set of decrypted utterances spoken during the live conversation, retrieving the token from the token vault database; and providing (i) the second set of decrypted utterances and (ii) at least a portion of the token as input to the bifurcated model to generate a second output, via the bifurcated model, indicating a second computer file identifier.
11. The method of any one of the preceding embodiments, wherein the first set of decrypted utterances is part of a second set of decrypted utterances, the method further comprising: determining, based on the second set of decrypted utterances, a first user identifier associated with a first portion of the second set of decrypted utterances and a second user identifier associated with a second portion of the second set of decrypted utterances; and extracting, based on the first user identifier, the first set of decrypted utterances from the second set of decrypted utterances.
12. The method of any one of the preceding embodiments, further comprising: determining, via the bifurcated model, based on the first utterance embedding, a third intermediate output from the second bifurcated model portion indicating a second computer file embedding different from the first computer file embedding; generating, via the bifurcated model, a second computer file identifier corresponding to the second computer file embedding based on a second similarity value between the second computer file embedding and the first utterance embedding satisfying the similarity threshold; and generating for display, on the user interface of the user device, during the live conversation, the graphical representation of the computer file corresponding to the first computer file identifier and a graphical representation of another computer file corresponding to the second computer file identifier.
13. The method of any one of the preceding embodiments, further comprising: further comprising: determining that the second similarity value is greater than the first similarity value; and presenting the graphical representation of the other computer file corresponding to the second computer file identifier in a main presentation region of the user interface and the graphical representation of the computer file corresponding to the first computer file identifier in an auxiliary presentation region of the user interface.
14. One or more non-transitory, computer-readable mediums storing instructions that, when executed by a data processing apparatus, cause the data processing apparatus to perform operations comprising those of any of embodiments 1-13.
15. A system comprising one or more processors; and memory storing instructions that, when executed by the processors, cause the processors to effectuate operations comprising those of any of embodiments 1-13.
16. A system comprising means for performing any of embodiments 1-13.

## Claims

1. A system for facilitating queryless information retrieval during a live conversation via
a bifurcated model implemented in a secured computer network, the system comprising:
one or more processors and non-transitory computer-readable media storing instructions, that when executed by the one or more processors, perform operations comprising:
receive, during a live conversation between a first user and a second user over a computer network, a first set of decrypted natural language utterances spoken within a first time period during the live conversation;
provide the first set of decrypted natural language utterances as input to a bifurcated model during the live conversation, the bifurcated model being trained to generate computer file identifiers corresponding to spoken natural language utterances during a conversation as output, the bifurcated model comprising (i) a dynamic model associated with a dynamic utterance embedding space and (ii) a static model associated with a static computer file embedding space;
in response to providing the first set of decrypted natural language utterances as input to the bifurcated model during the live conversation, generating, via the bifurcated model, a first intermediate output derived from the dynamic model indicating a first utterance embedding corresponding to the first set of decrypted natural language utterances;
determining, via the bifurcated model, based on the first utterance embedding, a second intermediate output derived from the static model indicating a first computer file embedding corresponding to the first set of decrypted natural language utterances;
generating, via the bifurcated model, a similarity metric by comparing the first computer file embedding to the first utterance embedding;
determining whether the similarity metric satisfies a similarity threshold;
in response to the similarity metric satisfying the similarity threshold, determining via the bifurcated model, a first computer file identifier corresponding to the first computer file embedding; and
generating for display, on a user interface of a user terminal, during the live conversation within a threshold time period of the first time period, a graphical representation of a computer file corresponding to the first computer file identifier.

2. The system of claim 1, wherein the static model associated with the static computer file embedding space is not updated during a training routine related to the bifurcated model and wherein the dynamic model associated with the dynamic utterance embedding space is updated during the training routine related to the bifurcated model such that one or more tunable parameters of the dynamic model is updated during the training routine to generate utterance embeddings that correspond to one or more static computer file embeddings of the static computer file embedding space.

3. A method for facilitating queryless information retrieval during a live conversation via a bifurcated model implemented in a secured computer network, the method comprising:
receiving, during a live conversation over a computer network, a first set of decrypted utterances spoken during the live conversation;
providing the first set of decrypted utterances as input to a bifurcated model, trained to generate computer file identifiers corresponding to utterances as output, the bifurcated model comprising (i) a first bifurcated model portion associated with a dynamic utterance embedding space and (ii) a second bifurcated model portion associated with a static computer file embedding space;
in response to providing the first set of decrypted utterances as input to the bifurcated model, generating, via the bifurcated model, a first intermediate output from the first bifurcated model portion indicating a first utterance embedding;
determining, via the bifurcated model, based on the first utterance embedding, a second intermediate output from the second bifurcated model portion indicating a first computer file embedding;
generating as output, via the bifurcated model, a first computer file identifier corresponding to the first computer file embedding based on a similarity value between the first computer file embedding and the first utterance embedding satisfying a similarity threshold; and
generating for display, on a user interface of a user device, during the live conversation, a graphical representation of a computer file corresponding to the first computer file identifier.

4. The method of claim 3, wherein the bifurcated model is trained via a training routine, the training routine comprising:
retrieving a positive training example comprising a target utterance embedding from a historical live conversation associated with a target computer file embedding of a set of computer file embeddings;
retrieving a set of negative training examples, wherein each negative training example comprises the target utterance embedding from the historical live conversation associated with an untargeted computer file embedding of the set of computer file embeddings;
generating a loss value based on (i) the positive training example and the set of negative training examples and (ii) an utterance embedding generated via the first bifurcated model portion; and
updating one or more first parameters of the first bifurcated model portion based on the loss value in lieu of updating one or more second parameters of the second bifurcated model portion such that the one or more second parameters remain constant during the training routine;
wherein, optionally, the positive training example is of a set of positive training examples, the set of negative training examples is of a plurality of sets of negative training examples, and each of the set of positive training examples and the plurality of sets of negative training examples are generated using a contrastive data generator.

5. The method of claim 4, further comprising:
generating the positive training example by selecting (i) the target utterance embedding from the historical live conversation and (ii) the target computer file embedding from the set of computer file embeddings;
assigning the positive training example a positive label;
determining a set of untargeted computer file embeddings, wherein the set of untargeted computer file embeddings comprise each computer file embedding of the set of computer file embeddings but not the target computer file embedding of the positive training example;
generating the set of negative training examples using (i) the target utterance embedding from the historical live conversation and (ii) each untargeted computer file embedding of the set of untargeted computer file embeddings; and
assigning each negative training example of the set of negative training examples a negative label.

6. The method of claim 4 or 5, further comprising:
identifying a user selection of a second computer file selected during the historical live conversation in connection with the target utterance embedding;
determining, based on the second computer file, a second computer file embedding corresponding to the second computer file; and
generating a second positive training example comprising (i) the target utterance embedding and (ii) the second computer file embedding.

7. The method of any one of claims 3 to 6, further comprising one or both of:
(a) retrieving during the live conversation, based on the first computer file identifier, the computer file corresponding to the first computer file identifier; and generating for display, on the user interface of the user device, during the live conversation, the graphical representation of the computer file corresponding to the first computer file identifier for a first time period; and
(b) determining, via the bifurcated model, based on the first utterance embedding, a third intermediate output from the second bifurcated model portion indicating a second computer file embedding, wherein the second computer file embedding is associated with a null computer file embedding; and generating for display, on the user interface of the user device, during the live conversation, a graphical representation of a null computer file corresponding to the null computer file embedding.

8. The method of any one of claims 3 to 7, further comprising one or both of:
(a) determining an amount of utterances of the first set of decrypted utterances spoken during the live conversation; and in response to determining that the amount of utterances satisfies a threshold amount of utterances, providing the first set of decrypted utterances as input to the bifurcated model; and
(b) determining a first time period associated with the first set of decrypted utterances spoken during the live conversation; and in response to determining that the first time period satisfies a threshold time period, providing the first set of decrypted utterances as input to the bifurcated model.

9. The method of any one of claims 3 to 8, further comprising:
generating a token comprising the first intermediate output associated with a timestamp indicating a time at which the first intermediate output is generated via the first bifurcated model portion;
storing the token in a token vault database;
in response to receiving, during the live conversation over the computer network, a second set of decrypted utterances spoken during the live conversation subsequent to the first set of decrypted utterances spoken during the live conversation, retrieving the token from the token vault database; and
providing (i) the second set of decrypted utterances and (ii) at least a portion of the token as input to the bifurcated model to generate a second output, via the bifurcated model, indicating a second computer file identifier.

10. The method of any one of claims 3 to 9, wherein the first set of decrypted utterances is part of a second set of decrypted utterances, the method further comprising:
determining, based on the second set of decrypted utterances, a first user identifier associated with a first portion of the second set of decrypted utterances and a second user identifier associated with a second portion of the second set of decrypted utterances; and
extracting, based on the first user identifier, the first set of decrypted utterances from the second set of decrypted utterances.

11. The method of any one of claims 3 to 10, further comprising:
determining, via the bifurcated model, based on a second utterance embedding, a third intermediate output from the second bifurcated model portion indicating a second computer file embedding different from the first computer file embedding;
generating, via the bifurcated model, a second computer file identifier corresponding to the second computer file embedding based on a second similarity value between the second computer file embedding and the second utterance embedding satisfying the similarity threshold; and
generating for display, on the user interface of the user device, during the live conversation, the graphical representation of the computer file corresponding to the first computer file identifier and a graphical representation of another computer file corresponding to the second computer file identifier;
wherein, optionally, the method further comprises: determining that the second similarity value is greater than the first similarity value; and presenting the graphical representation of the other computer file corresponding to the second computer file identifier in a main presentation region of the user interface and the graphical representation of the computer file corresponding to the first computer file identifier in an auxiliary presentation region of the user interface.

12. One or more non-transitory computer-readable media comprising instructions that, when executed by one or more processors, cause operations comprising:
receiving, during a live conversation, a first set of decrypted utterances communicated during the live conversation;
generating, via a bifurcated model based on the first set of decrypted utterances, a first intermediate output, from a first bifurcated model portion associated with a dynamic embedding space, indicating a first utterance embedding;
determining, via the bifurcated model, based on the first utterance embedding, a second intermediate output, from a second bifurcated model portion associated with a static embedding space, indicating a first file embedding;
determining a first file identifier corresponding to the first file embedding based on a similarity value between the first file embedding and the first utterance embedding satisfying a similarity threshold; and
generating for display, on a user interface of a user device, during the live conversation, a graphical representation of a file corresponding to the first file identifier.

13. The media of claim 12, wherein bifurcated model is trained via a training routine, the training routine comprising:
retrieving a positive training example comprising a target utterance embedding from a training conversation associated with a target file embedding of a set of file embeddings;
retrieving a set of negative training examples, wherein each negative training example comprises the target utterance embedding from the training conversation associated with an untargeted file embedding of the set of file embeddings;
generating a loss value based on (i) the positive training example and the set of negative training examples and (ii) an utterance embedding generated via the first bifurcated model portion; and
updating one or more first parameters of the first bifurcated model portion based on the loss value in lieu of updating one or more second parameters of the second bifurcated model portion such that the one or more second parameters remain constant during the training routine.
wherein, optionally, the instructions that, when executed by the one or more processors, further cause operations comprising: identifying a user selection of a second file selected during the training conversation in connection with the target utterance embedding; determining, based on the second file, a second file embedding corresponding to the second file; and generating a second positive training example comprising (i) the target utterance embedding and (ii) the second file embedding.

14. The media of claim 12 or 13, wherein the instructions that, when executed by the one or more processors, further cause operations comprising:
generating a token comprising the first intermediate output associated with a timestamp indicating a time at which the first intermediate output is generated via the first bifurcated model portion;
storing the token in a token vault database;
in response to receiving, during the live conversation, a second set of decrypted utterances spoken during the live conversation subsequent to the first set of decrypted utterances spoken during the live conversation, retrieving the token from the token vault database; and
providing (i) the second set of decrypted utterances and (ii) at least a portion of the token as input to the bifurcated model to determine a second file identifier.

15. The media of any one of claims 12 to 14, wherein the first set of decrypted utterances is part of a second set of decrypted utterances, and wherein the instructions that, when executed by the one or more processors, further cause operations comprising:
determining, based on the second set of decrypted utterances, a first user identifier associated with a first portion of the second set of decrypted utterances and a second user identifier associated with a second portion of the second set of decrypted utterances; and
extracting, based on the first user identifier, the first set of decrypted utterances from the second set of decrypted utterances.
